# EUROPÄISCHE PATENTSCHRIFT

(11) **EP 2 977 961 B1**
(45) Veröffentlichungstag und Bekanntmachung des Hinweises auf die Patenterteilung: **27.06.2018**
(21) Anmeldenummer: 14178303.5
(22) Anmeldetag: 24.07.2014
(51) Int. Cl.: G06T 19/00

(54) **Verfahren und Kommunikationseinrichtung zum Erstellen und/oder Ändern virtueller Objekte**
Method and communication device for creating and/or editing virtual objects
Procédé et dispositif de communication destinés à créer et/ou éditer des objets virtuels

(43) Veröffentlichungstag der Anmeldung: 27.01.2016
(73) Patentinhaber: Deutsche Telekom AG, 53113 Bonn (DE)
(72) Erfinder: Michael, Witych, 53227 Bonn (DE); Müller, Dietmar, 53227 Bonn (DE); Welzel, Thomas, 53604 Bad Honnef (DE)
(74) Vertreter: Blumbach · Zinngrebe Patent- und Rechtsanwälte

(56) Entgegenhaltungen:
- Claudio Kirner ET AL: "Interaction, Collaboration and Authoring in Augmented Reality Environments", , 2009, XP055168543, Gefunden im Internet: URL:http://www.ckirner.com/download/artigo s/Interaction-SVR2009.pdf [gefunden am 2015-02-09]
- SEICHTER H ET AL: "ComposAR: An intuitive tool for authoring AR applications", MIXED AND AUGMENTED REALITY, 2008. ISMAR 2008. 7TH IEEE/ACM INTERNATIONAL SYMPOSIUM ON, IEEE, PISCATAWAY, NJ, USA, 15. September 2008 (2008-09-15), Seiten 177-178, XP031344002, ISBN: 978-1-4244-2840-3
- SHEPARD DANIEL P ET AL: "Precise Augmented Reality Enabled by Carrier-Phase Differential GPS", GNSS 2012 - PROCEEDINGS OF THE 25TH INTERNATIONAL TECHNICAL MEETING OF THE SATELLITE DIVISION OF THE INSTITUTE OF NAVIGATION (ION GNSS 2012), THE INSTITUTE OF NAVIGATION, 8551 RIXLEW LANE SUITE 360 MANASSAS, VA 20109, USA, 21. September 2012 (2012-09-21), Seiten 3169-3184, XP056008599,
- Anonymous: "Location | Android Developers", , 1. Juli 2014 (2014-07-01), XP055188387, Gefunden im Internet: URL:https://web.archive.org/web/2014070106 5849/http://developer.android.com/referenc e/android/location/Location.html [gefunden am 2015-05-08]
- Mike Wozniewski ET AL: "Towards in situ authoring of augmented reality content", , 2011, XP055188413, Gefunden im Internet: URL:http://mikewoz.com/publications/Farrag o-ISMAR-2011.pdf [gefunden am 2015-05-08]
- Jinki Jung: "Smartphone as an augmented reality authoring tool via multi-touch based 3D interaction method", VRCAI '12 Proceedings of the 11th ACM SIGGRAPH International Conference on Virtual-Reality Continuum and its Applications in Industry, 2012, Seiten 17-20, XP055188414, Gefunden im Internet: URL:http://dl.acm.org/citation.cfm?id=2407 520 [gefunden am 2015-05-08]
- KANBARA M ET AL: "A stereoscopic video see-through augmented reality system based on real-time vision-based registration", VIRTUAL REALITY, 2000. PROCEEDINGS. IEEE NEW BRUNSWICK, NJ, USA 18-22 MARCH 2000, LOS ALAMITOS, CA, USA,IEEE COMPUT. SOC, US, 18. März 2000 (2000-03-18), Seiten 255-262, XP010378991, DOI: 10.1109/VR.2000.840506 ISBN: 978-0-7695-0478-0
- YAMANOUE H ED - ANONYMOUS: "The Differences Between Toed-in Camera Configurations and Parallel Camera Configurations in Shooting Stereoscopic Images", PROCEEDINGS / 2006 IEEE INTERNATIONAL CONFERENCE ON MULTIMEDIA AND EXPO, ICME 2006 : JULY 9 - 12, 2006, HILTON, TORONTO, TORONTO, ONTARIO, CANADA, IEEE SERVICE CENTER, PISCATAWAY, NJ, 9. Juli 2006 (2006-07-09), Seiten 1701-1704, XP031033182, DOI: 10.1109/ICME.2006.262877 ISBN: 978-1-4244-0366-0

## Beschreibung

Die Erfindung betrifft allgemein die computergestützte Erweiterung der Realitätswahrnehmung, auch als erweiterte Realität (Augmented Reality, AR) bezeichnet. Insbesondere betrifft die Erfindung ein Verfahren und eine Kommunikationseinrichtung zum Erstellen und/oder Ändern virtueller Objekte, welche einem Bild einer realen Umgebung zum Erzeugen einer erweiterten Realität überlagert werden.

Augmented Reality (AR) bezeichnet allgemein das Prinzip, eine reale Umgebung um zusätzliche, virtuelle Informationen zu erweitern. Zu diesem Zweck können im Sichtfeld eines Betrachters zusätzliche, typischerweise computergenerierte Informationen visuell dargestellt werden. So können zum Beispiel mittels eines Head-Up-Displays in einem Auto Informationen wie Geschwindigkeit oder Drehzahl angezeigt oder in einem Flugzeug eine Zielerfassung durch visuelle Anzeigen unterstützt werden. Auch sind Datenbrillen bekannt, mittels denen visuelle Informationen in das Sichtfeld eines Benutzers eingeblendet werden können.

Alternativ kann eine AR-fähige Vorrichtung mit einer Kamera ausgerüstet sein, wobei ein aufgenommenes Bild der realen Umgebung mit virtuellen Informationen erweitert und das erweiterte Bild auf einem Display der AR-fähigen Vorrichtung angezeigt wird.

Neben Informationen, die immer an der gleichen Stelle im Sichtfeld des Betrachters angezeigt werden, wie zum Beispiel eine Geschwindigkeitsanzeige im Head-Up-Display eines Autos, werden insbesondere virtuelle AR-Objekte angezeigt, denen jeweils eine bestimmte Position und Orientierung innerhalb der realen Umgebung zugeordnet ist, so dass diese idealerweise mit der realen Umgebung verschmelzen. Neben einem Display umfasst daher eine mobile AR-fähige Vorrichtung insbesondere ein System zur Positions- und Orientierungsbestimmung der AR-fähigen Vorrichtung, um eine möglichst gute Übereinstimmung zwischen realer und virtueller Information zu gewährleisten. Die AR-fähige Vorrichtung kann ferner dazu ausgebildet sein, reale Objekte im Sichtfeld mittels Bilderkennung automatisch zu identifizieren und virtuelle Informationen oder virtuelle Objekte in einer vorgegebenen Relation zu einem identifizierten realen Objekt anzuzeigen.

Virtuelle AR-Objekte, welche als Zusatzinformationen visuell angezeigt werden sollen, werden üblicherweise an zentraler Stelle definiert und in einem AR-Daten-Server oder einer AR-Datenbank gespeichert, wobei den virtuellen Objekten Positionen und Orientierungen zugeordnet werden, die auch denen von bekannten realen Objekten entsprechen können. Um diese gespeicherten Informationen abrufen zu können, werden typischerweise Kommunikationseinrichtungen als AR-fähige Vorrichtungen eingesetzt, welche mit einem AR-Daten-Server kommunizieren bzw. auf eine AR-Datenbank zugreifen können. Aus dem Stand der Technik ist das Dokument "Interaction, Collaboration and Authoring in Augmented Reality Environments" bekannt , welches ein Verfahren zum Entwickeln von Anwendungen der Erweiterten Realität beschreibt. Der Erfindung liegt die Aufgabe zugrunde, AR-Systeme zu verbessern und/oder zu vereinfachen, und insbesondere einen Weg aufzuzeigen, wie virtuelle Objekte, insbesondere dreidimensionale virtuelle Objekte, auf einfache Weise erstellt und/oder geändert werden können.

Diese Aufgabe wird durch ein Verfahren gemäß Anspruch 1, sowie durch eine bewegliche Kommunikationseinrichtung gemäß Anspruch 15 gelöst. Vorteilhafte Ausführungsformen und Weiterbildungen sind in den jeweiligen abhängigen Ansprüchen angegeben.

Dementsprechend sieht die Erfindung ein Verfahren zum Erstellen und/oder Ändern wenigstens eines virtuellen Objekts mittels einer beweglichen Kommunikationseinrichtung vor, wobei die Kommunikationseinrichtung eine Kamera, einen Bildschirm und eine Benutzerschnittstelle umfasst. Gemäß dem Verfahren wird eine Definition wenigstens eines virtuellen Objektes bereitgestellt, wobei die Definition für das jeweilige virtuelle Objekt wenigstens eine Position, eine Orientierung und eine Gestalt umfasst. Das Bereitstellen der Definition erfolgt vorzugsweise durch Speichern der Definition des virtuellen Objektes als Datensatz in einem Speicher, beispielsweise einem Arbeitsspeicher, der Kommunikationseinrichtung. Neben Position, Orientierung und Gestalt des virtuellen Objektes kann die Definition weitere Parameter umfassen, wie beispielsweise Farbe, Oberflächentextur oder einen zugeordneten Text.

Das Verfahren sieht ferner vor, die Position und die Orientierung der Kommunikationseinrichtung in einem übergeordneten, nicht Kommunikationseinrichtungsfesten Raumkoordinatensystem zu bestimmen, wobei die Kommunikationseinrichtung zu diesem Zweck insbesondere wenigstens einen Sensor zum Bestimmen der Position und der Orientierung der Kommunikationseinrichtung aufweist. Es sei angemerkt, dass das übergeordnete Raumkoordinatensystem ein erdfestes Raumkoordinatensystem sein kann, beispielsweise basierend auf dem GPS Referenzkoordinatensystem WGS84. In diesem Fall kann als Positions-Sensor der Kommunikationseinrichtung beispielsweise ein GPS-Empfänger eingesetzt werden. Das übergeordnete Raumkoordinatensystem kann aber beispielsweise auch ein relativ zur Erde bewegtes Raumkoordinatensystem sein, welches zum Beispiel als Fahrzeugfestes Raumkoordinatensystem bezüglich eines bewegten Fahrzeugs wie einem Zug definiert ist. Im Fall eines bewegten Raumkoordinatensystems sind vorzugsweise geeignete Vorrichtungen vorgesehen, welche mit Sensoren zur Positions- und Orientierungsbestimmung der Kommunikationseinrichtung zusammenwirken und ermöglichen, die Position und Orientierung der Kommunikationseinrichtung im bewegten Raumkoordinatensystem zu bestimmen. Im Beispiel des bewegten Fahrzeugs sind diese Vorrichtungen vorzugsweise im Fahrzeug angeordnet und bewegen sich dementsprechend mit.

Das Verfahren sieht weiterhin vor, mittels der Kamera der Kommunikationseinrichtung ein Bild der realen Umgebung der Kommunikationseinrichtung aufzunehmen, ein Überlagerungs-Bild durch Überlagern des aufgenommenen Bildes mit dem wenigstens einen virtuellen Objekt zu erzeugen und das Überlagerungs-Bild auf dem Bildschirm der Kommunikationseinrichtung anzuzeigen.

Um das wenigstens eine virtuelle Objekt zu ändern, sieht das Verfahren vor, mittels der Benutzerschnittstelle Benutzereingaben zu erfassen und die Definition des wenigstens einen virtuellen Objekts in Abhängigkeit der erfassten Benutzereingaben zu ändern.

Die geänderte Definition des wenigstens einen virtuellen Objekts wird, vorzugsweise unter Ansprechen auf eine entsprechende Benutzereingabe, in einem Objekt-Speicher gespeichert, wobei die gespeicherte Definition eine Position und eine Orientierung des virtuellen Objektes im übergeordneten Raumkoordinatensystem umfasst. Es sei angemerkt, dass die bereitgestellte Definition des wenigstens einen virtuellen Objektes eine Position und/oder eine Orientierung in einem Kommunikationseinrichtungsfesten Raumkoordinatensystem umfassen kann, wobei in diesem Fall vor dem Speichern eine Transformation in das übergeordnete Raumkoordinatensystem erfolgt.

Ein Kerngedanke der Erfindung kann darin gesehen werden, virtuelle AR-Objekte vollständig mittels einer beweglichen Kommunikationseinrichtung zu erstellen und/oder zu ändern, statt diese an zentraler Stelle zu definieren, wobei dies insbesondere mittels einer Benutzerschnittstelle der Kommunikationseinrichtung erfolgt, die zum Erfassen von auf dem zweidimensionalen Bildraum einer Kamera der Kommunikationseinrichtung basierenden Benutzereingaben ausgebildet ist, wie zum Beispiel ein Touchscreen.

Das wenigstens eine virtuelle Objekt ist insbesondere ein dreidimensionales virtuelles Objekt, wobei prinzipiell jede dreidimensionale Gestalt vorgesehen sein kann, die mittels eines digitalen Datensatzes repräsentierbar ist. Es sei angemerkt, dass ein virtuelles Objekt auch ein flächiges oder ein linienförmiges Objekt sein kann, beispielsweise mit der Funktion eines Hinweisschildes oder als Markierung einer Position. Da jedoch auch diesen an sich zwei- bzw. eindimensionalen Objekten eine gewisse räumliche Ausdehnung zuzuordnen ist, sind auch diese Art von Objekten begrifflich mit umfasst, wenn auf dreidimensionale Objekte, oder kurz 3D-Objekte, Bezug genommen wird.

Zum Erzeugen des Überlagerungs-Bildes wird vorteilhaft eine Transformation der Koordinaten des wenigstens einen virtuellen Objekts vom dreidimensionalen Objektraum in den zweidimensionalen Bildraum der Kamera der Kommunikationseinrichtung in Abhängigkeit von in einem Parameter-Speicher gespeicherten Kamera-Parametern durchgeführt. Die zu transformierenden Koordinaten sind abhängig von der Repräsentation des jeweiligen virtuellen Objektes. Vorzugsweise umfasst die Definition eines virtuellen Objektes eine zwei- oder dreidimensionale geometrische Form, die durch Punkte, Kanten und/oder Flächen definiert ist, durch welche die zu transformierenden Koordinaten des virtuellen Objektes vorgegeben werden.

Das Erzeugen und Anzeigen von Überlagerungs-Bildern erfolgt vorzugsweise zyklisch wiederholt und insbesondere mit einer ausreichend hohen Frequenz, so dass auf dem Bildschirm im Wesentlichen in Echtzeit das mit dem wenigstens einen virtuellen Objekt überlagerte Kamerabild angezeigt wird. Die Kommunikationseinrichtung stellt somit vorzugsweise eine Monitorfunktion einer erweiterten Realität bereit. Zu diesem Zweck umfasst die Kommunikationseinrichtung vorzugsweise einen digitalen Bildsensor zum Erfassen des Kamerabildes, welcher zur Durchführung des Verfahrens durchgehend aktiv ist.

Vorteilhaft wird auch die Position und die Orientierung der Kommunikationseinrichtung im übergeordneten Raumkoordinatensystem zyklisch wiederholt bestimmt. Das Aufnehmen eines Bildes der realen Umgebung und das Erzeugen und Anzeigen eines Überlagerungs-Bildes kann dabei mit einer anderen Frequenz erfolgen, als das Bestimmen der Position und der Orientierung der Kommunikationseinrichtung.

Für eine Neuerstellung eines virtuellen Objektes sieht das Verfahren vorteilhaft vor, die Gestalt des wenigstens einen virtuellen Objekts aus einer Mehrzahl vorgegebener Gestalten mittels der Benutzerschnittstelle auszuwählen und dem virtuellen Objekt eine vorgegebene Position und Orientierung in einem Kommunikationseinrichtungsfesten und/oder im übergeordneten, nicht Kommunikationseinrichtungsfesten Raumkoordinatensystem zuzuordnen. Die so erzeugte Definition des virtuellen Objektes wird typischerweise als Datensatz im Arbeitsspeicher der Kommunikationseinrichtung bereitgestellt.

Die vorgegebenen Gestalten umfassen vorzugsweise zwei- oder dreidimensionale geometrische Formen, die durch Punkte, Kanten und/oder Flächen definiert sind. Insbesondere können die geometrischen Formen auch durch eine Mehrzahl von Polygonen definiert sein, wie dies aus der 3D-Modellierung bekannt ist. Durch die vorgegebene Gestalt wird auch die Größe des virtuellen Objekts als vorgegebene Einheitsgröße festgelegt.

Die in der Definition eines virtuellen Objektes enthaltenen Informationen zur Gestalt des virtuellen Objektes beziehen sich vorteilhaft auf eine Gestalt mit der vorgegebenen Einheitsgröße, wobei die Definition des virtuellen Objektes zusätzlich einen Maßstab umfasst, welcher die Größe des virtuellen Objekts in Abhängigkeit dieser Einheitsgröße definiert.

Die vorgegebene Position eines neu erstellten virtuellen Objektes ist vorzugsweise in einem Kommunikationseinrichtungsfesten Raumkoordinatensystem definiert, so dass sich das virtuelle Objekt bei Bewegung der Kommunikationseinrichtung mit dieser mit bewegt. Beispielsweise kann für das neu erstellte virtuelle Objekt eine Position auf der optischen Hauptachse der Kamera der Kommunikationseinrichtung und in einem vordefinierten Abstand zu der Kommunikationseinrichtung vorgegeben werden, so dass das virtuelle Objekt im Überlagerungs-Bild jeweils in der Bildmitte angezeigt wird.

Die Orientierung des neu erstellten virtuellen Objektes kann ebenfalls in einem Kommunikationseinrichtungsfesten Raumkoordinatensystem definiert vorgegeben werden, so dass beispielsweise eine ausgewählte Seite des virtuellen Objektes in Richtung der Kamera-Bildebene der Kommunikationseinrichtung orientiert ist.

Es kann jedoch auch vorteilhaft sein, die Orientierung des neu erstellten virtuellen Objektes zumindest teilweise im übergeordneten Raumkoordinatensystem vorzugeben. Dies ist insbesondere der Fall, wenn aufgrund des Objekttyps eine bestimmte Orientierung relativ zur Umgebung gewünscht ist. Stellt das virtuelle Objekt beispielsweise einen Tisch dar, so sieht die vorgegebene Orientierung vorzugsweise vor, dass die Tischplatte parallel zum Boden orientiert ist. Der in diesem Beispiel verbleibende Freiheitsgrad der Orientierung des neu erstellten virtuellen Objektes, bestehend in einer Rotation um eine Achse senkrecht zum Boden, kann wiederum relativ zur Orientierung der Kommunikationseinrichtung festgelegt werden.

Position und Orientierung des neu erstellten virtuellen Objektes können aber beispielsweise auch direkt im übergeordneten Raumkoordinatensystem definiert werden.

Die vorgegebenen Gestalten bilden somit zusammen mit der jeweils vorgegebenen Position und Orientierung Objekt-Vorlagen oder Templates virtueller Objekte, mittels derer ein Benutzer der Kommunikationseinrichtung virtuelle Objekte erstellen und in einem übergeordneten Raumkoordinatensystem platzieren kann. Das Platzieren im übergeordneten Raumkoordinatensystem kann dabei direkt bei Objekterstellung erfolgen oder durch eine Benutzereingabe mittels der Benutzerschnittstelle erfolgen, sobald der Benutzer das neu erstelle virtuelle Objekt durch Bewegen der Kommunikationseinrichtung in die gewünschte Position und Orientierung gebracht hat.

Alternativ oder zusätzlich zu der Neuerstellung eines virtuellen Objektes sieht das Verfahren vorteilhaft vor, automatisch wenigstens eine gespeicherte Definition eines virtuellen Objekts aus dem Objekt-Speicher abzurufen. Besonders vorteilhaft werden nur die im Objekt-Speicher gespeicherten virtuellen Objekte abgerufen, welche sich jeweils im Objektraum der Kamera der Kommunikationseinrichtung befinden, so dass das Überlagerungs-Bild alle virtuellen Objekte umfasst, die aufgrund ihrer Position und Orientierung in dem mittels der Kamera sichtbaren Bereich angeordnet sind.

Um virtuelle Objekte, deren Position und Orientierung im übergeordneten Raumkoordinatensystem definiert sind, korrekt im Überlagerungsbild darstellen zu können, ist es erforderlich, die Position und Orientierung der Kommunikationseinrichtung im übergeordneten Raumkoordinatensystem zu bestimmen. In einer vorteilhaften Ausführungsform des Verfahrens ist vorgesehen, dass zum Bestimmen der Orientierung der Kommunikationseinrichtung im übergeordneten Raumkoordinatensystem die Orientierung der optischen Hauptachse der Kamera der Kommunikationseinrichtung im übergeordneten Raumkoordinatensystem und die Orientierung des Bildkoordinatensystems der Kamera relativ zur optischen Hauptachse bestimmt werden.

Das Erzeugen des Überlagerungs-Bildes umfasst insbesondere eine Transformation der Koordinaten des wenigstens einen virtuellen Objekts vom dreidimensionalen Objektraum der Kamera in den zweidimensionalen Bildraum der Kamera in Abhängigkeit von in einem Parameter-Speicher gespeicherten Kamera-Parametern. Typischerweise umfasst die Kamera ein Objektiv, welches die reale Umgebung auf eine Sensorfläche eines optischen Sensors abbildet. Die Transformation basiert daher im Wesentlichen auf dem Abbildungsmodell einer Lochbildkamera, insbesondere ist die Transformation eine Perspektivtransformation, welche eine Zentralprojektion der Kamera der Kommunikationseinrichtung mit allen notwendigen Korrekturen, wie zum Beispiel den bekannten brennweitenabhängigen Verzeichnungsfunktionen des Objektives, umfasst. Insbesondere definieren die gespeicherten Kamera-Parameter die sogenannte innere Orientierung der Kamera, d.h. die Position des Projektionszentrums bezogen auf die Bildebene, wobei diese beschrieben wird durch die Koordinaten des Bildhauptpunktes und die Kamerakonstante. Der Bildhauptpunkt ist der Durchstoßpunkt der optischen Achse durch die Sensorebene des Bildsensors, wobei das Koordinatensystem, in welchem die Koordinaten des Bildhauptpunktes angegeben sind, beispielsweise von zwei durch die Bildecken verlaufende Geraden, die sich im Bildmittelpunkt schneiden, aufgespannt wird. Die Kamerakonstante ist der Abstand zwischen dem Projektionszentrum und seinem Lotfußpunkt in der Sensorebene. Die Kamerakonstante entspricht typischerweise der Brennweite des verwendeten Objektivs. Die Parameter der inneren Orientierung können insbesondere auch Daten zur Korrektur von Abbildungsfehlern umfassen, beispielsweise in Form einer Abbildungsvorschrift, die jedem Bildpunkt eine korrigierte Bildkoordinate zuordnet.

Die Sensoren der Kommunikationseinrichtung zum Bestimmen der Position und der Orientierung der Kommunikationseinrichtung liefern in der Regel keine völlig exakten Werte, sondern vielmehr Schätzwerte für Position und Orientierung. Vorzugsweise sind die Sensoren derart ausgebildet, dass diese auch Werte für die jeweilige Genauigkeit eines ermittelten Schätzwertes bereitstellen.

Dementsprechend umfasst auch die Definition des wenigstens einen virtuellen Objekts für die dem wenigstens einen virtuellen Objekt zugeordnete Position und/oder Orientierung jeweils Schätzwerte mit einer zugeordneten Genauigkeit. Ferner kann auch ein in der Definition des wenigstens einen virtuellen Objekts enthaltener Maßstab als Schätzwert mit zugeordneter Genauigkeit definiert sein.

Die Schätzwerte für Position und/oder Orientierung des wenigstens einen virtuellen Objekts im übergeordneten Raumkoordinatensystem und deren zugeordneten Genauigkeiten werden in Abhängigkeit der als Schätzwerte mit zugeordneter Genauigkeit bestimmten Position und/oder Orientierung der Kommunikationseinrichtung im übergeordneten Raumkoordinatensystem ermittelt. Zusätzlich können die Schätzwerte für Position und/oder Orientierung des wenigstens einen virtuellen Objekts im übergeordneten Raumkoordinatensystem und deren zugeordneten Genauigkeiten vorteilhaft in Abhängigkeit der Definition des übergeordneten Raumkoordinatensystems, insbesondere dessen Genauigkeit, und/oder in Abhängigkeit weiterer virtueller Objekte ermittelt werden. Insbesondere werden die Genauigkeiten bezüglich Position und Orientierung bei Speichern der Definition eines virtuellen Objektes mit gespeichert.

Die Definition eines aus dem Objekt-Speicher abgerufenen virtuellen Objekts umfasst zunächst die gespeicherten Genauigkeiten. Vorzugsweise werden für Position und Orientierung des virtuellen Objektes erst dann neue Genauigkeiten ermittelt, wenn die Definition des virtuellen Objektes durch Benutzereingaben geändert wird. Bei erneuter Speicherung eines aus dem Objekt-Speicher abgerufenen und nachfolgend geänderten Objektes wird das zuvor abgerufene virtuelle Objekt vorzugsweise überschrieben, d.h. es werden die geänderten Genauigkeiten gespeichert. Zu diesem Zweck kann die Definition jedes virtuellen Objektes eine Identifikationsinformation umfassen, welche das jeweilige virtuelle Objekt eindeutig identifiziert.

Für den Fall, dass die Genauigkeit, mit der die Position und/oder Orientierung der Kommunikationseinrichtung zu einem gegebenen Zeitpunkt bestimmbar ist, geringer ist als die Genauigkeiten, welche einem aus dem Objekt-Speicher abgerufenen virtuellen Objekt zugeordnet sind, würden bei Ändern und erneutem Speichern des abgerufenen virtuellen Objektes die diesem zugeordneten Genauigkeiten verschlechtert werden. Auch können in diesem Fall bei Neuerstellen eines virtuellen Objektes die Schätzwerte für Position und/oder Orientierung des neu erstellten virtuellen Objekts im übergeordneten Raumkoordinatensystem und deren zugeordneten Genauigkeiten in Abhängigkeit der Position und/oder Orientierung der Kommunikationseinrichtung im übergeordneten Raumkoordinatensystem nur mit der geringeren Genauigkeit ermittelt werden. Insbesondere in einem solchen Fall kann vorteilhaft vorgesehen sein, die Schätzwerte für Position und/oder Orientierung eines neu erstellten virtuellen Objekts im übergeordneten Raumkoordinatensystem in Abhängigkeit eines anderen virtuellen Objektes festzulegen, wobei insbesondere die Position und Orientierung des neu erstellten virtuellen Objektes relativ zu der Position und Orientierung des anderen virtuellen Objektes festgelegt wird. Die Genauigkeiten bezüglich Position und Orientierung des neu erstellten virtuellen Objektes ergeben sich dann aus den Genauigkeiten bezüglich Position und Orientierung des anderen virtuellen Objektes, wodurch die Neuerstellung eines virtuellen Objektes mit einer höheren Genauigkeit ermöglicht wird.

Um einen Benutzer der Kommunikationseinrichtung über die jeweiligen Genauigkeiten bezüglich eines virtuellen Objektes zu informieren, ist vorgesehen, auf dem Bildschirm der Kommunikationseinrichtung eine Information anzuzeigen, welche die Genauigkeiten wiedergibt, die dem Schätzwert der Position und/oder dem Schätzwert der Orientierung des wenigstens einen virtuellen Objektes zugeordnet sind.

Vorzugsweise kann über die Benutzerschnittstelle ein virtuelles Objekt zur Bearbeitung ausgewählt werden, wobei durch Benutzereingaben bewirkte Änderungen dann nur bezüglich der Definition des jeweils ausgewählten virtuellen Objekts ausgeführt werden. Wird ein virtuelles Objekt neu erstellt, so wird dieses vorzugsweise automatisch zur Bearbeitung ausgewählt. Zum Auswählen eines von mehreren aus dem Objekt-Speicher abgerufenen virtuellen Objekten kann vorteilhaft ein virtuelles Sucher-Objekt definiert und im Überlagerungs-Bild, vorzugsweise in der Bildmitte, angezeigt werden, wobei dem Sucher-Objekt eine Position und Orientierung zugeordnet ist, und wobei das Auswählen eines virtuellen Objekts aus einer Mehrzahl definierter virtueller Objekte in Abhängigkeit der relativen Position und/oder Orientierung zu dem virtuellen Sucher-Objekt erfolgt. Vorteilhaft wird automatisch das virtuelle Objekt ausgewählt, welches den geringsten Abstand zu dem Sucher-Objekt aufweist. Ein virtuelles Objekt kann somit vorteilhaft ausgewählt werden, indem das Sucher-Objekt durch Bewegen der Kommunikationseinrichtung auf das gewünschte virtuelle Objekt gerichtet wird. Das jeweils zur Bearbeitung ausgewählte virtuelle Objekt wird vorzugsweise im Überlagerungs-Bild entsprechend gekennzeichnet, beispielsweise durch farbliches Markieren.

Prinzipiell kann auch vorgesehen sein, mehrere virtuelle Objekte gleichzeitig auszuwählen, wobei durch Benutzereingaben bewirkte Änderungen dann gleichzeitig für alle ausgewählten virtuellen Objekte ausgeführt werden.

Zum Durchführen von Änderungen der Definitionen virtueller Objekte ist die Benutzerschnittstelle der Kommunikationseinrichtung vorteilhaft zum Erfassen von Eingabegesten ausgebildet, wobei das Ändern der Definition eines virtuellen Objekts in Abhängigkeit wenigstens einer über die Benutzerschnittstelle erfassten Eingabegeste erfolgt.

Das Erfassen der Eingabegeste erfolgt insbesondere durch Erfassen einer ein- oder zweidimensionalen Bewegungsabfolge, welche auf einer berührungsempfindlichen Fläche der Benutzerschnittstelle mittels eines Zeigemittels ausgeführt wird. Die berührungsempfindliche Fläche kann vorzugsweise als Touchpad oder als Touchscreen ausgebildet sein, wobei das Erfassen von Berührungen beispielsweise resistiv, kapazitiv oder optisch erfolgt. Verwendbare Zeigemittel hängen vom konkreten Aufbau der berührungsempfindlichen Fläche ab, typischerweise kann ein Finger des Benutzers oder ein Zeigestift als Zeigemittel eingesetzt werden.

Ein optisches Erfassen einer Eingabegeste kann auch berührungslos erfolgen, beispielsweise durch Erfassen dreidimensionaler Bewegungen mittels Bewegungserfassungs-Kameras, welche als Bestandteil der Benutzerschnittstelle und zusätzlich zu der zum Aufnehmen von Bildern der realen Umgebung eingesetzten Kamera der Kommunikationseinrichtung vorgesehen sein können.

In einer vorteilhaften Ausführungsform des Verfahrens ist vorgesehen, im Überlagerungs-Bild ein dem wenigstens einen virtuellen Objekt, insbesondere dem jeweils ausgewählten virtuellen Objekt, zugeordnetes Koordinatenachsen-Dreibein anzuzeigen, wobei die Benutzerschnittstelle vorzugsweise Eingabeelemente umfasst, über welche jeweils bezüglich einer ausgewählten Koordinatenachse eine Translation oder Rotation des virtuellen Objekts ausführbar ist.

Ein Eingabeelement kann zu diesem Zweck die Funktion eines Schiebereglers aufweisen, der beispielsweise durch Zieh- oder Wisch-Bewegungen des Zeigemittels in einem definierten Bereich der Bedienfläche bedienbar ist.

Um die Platzierung eines virtuellen Objektes besser überprüfen zu können, ist vorteilhaft vorgesehen, ein erstes und ein zweites Überlagerungs-Bild durch Aufnehmen eines ersten und zweiten Bildes der realen Umgebung der Kommunikationseinrichtung mittels der Kamera und durch jeweiliges Überlagern des ersten und zweiten aufgenommenen Bildes mit dem wenigstens einen virtuellen Objekt zu erzeugen, wobei das erste und zweite Bild bei unterschiedlichen Positionen und/oder unterschiedlichen Orientierungen der Kommunikationseinrichtung aufgenommen werden, und das erste und zweite Überlagerungs-Bild auf dem Bildschirm der Kommunikationseinrichtung zyklisch wechselnd anzuzeigen. Auf diese Weise kann ein virtuelles Objekt im schnellen Wechsel aus zwei unterschiedlichen Blickwinkeln betrachtet werden, wodurch eine Fehlplatzierung leichter erkannt werden kann.

Die räumliche Anordnung eines virtuellen Objektes relativ zu anderen virtuellen und realen Objekten kann vom Benutzer der Kommunikationseinrichtung besonders gut eingeschätzt werden, wenn durch das zyklische Anzeigen der beiden Überlagerungs-Bilder ein stereoskopischer Effekt erzielt wird.

Um einen solchen stereoskopischen Effekt bezüglich eines ausgewählten virtuellen Objektes zu erzielen, wird der Benutzer mit besonderem Vorteil zumindest für die Aufnahme des zweiten Bildes über auf dem Bildschirm angezeigte Informationen zu einer Position und/oder Orientierung der Kommunikationseinrichtung geführt, so dass die durch die optische Hauptachse der Kamera bei Aufnahme des ersten und zweiten Bildes gebildeten Geraden den geringsten Abstand zueinander in der Umgebung des ausgewählten virtuellen Objektes aufweisen.

Zum Erreichen eines stereoskopischen Effektes würden sich im Idealfall die durch die optische Hauptachse der Kamera bei Aufnahme des ersten und zweiten Bildes gebildeten Geraden im Zentrum des virtuellen Objekts schneiden, jedoch schneiden sich diese Geraden aufgrund der unzureichend genauen Nutzerbewegung der Kamera in der Regel nicht, sondern sind immer etwas windschief angeordnet. Vorteilhaft wird dem Benutzer angezeigt, dass er die Kamera der Kommunikationseinrichtung für die Aufnahme des zweiten Bildes richtig positioniert hat. Dies kann beispielsweise der Fall sein, wenn auf den durch die optische Hauptachse der Kamera bei Aufnahme des ersten und zweiten Bildes gebildeten Geraden diejenigen Punkte, an denen die Geraden den geringsten Abstand zueinander aufweisen, jeweils einen Abstand zu dem virtuellen Objekt unterhalb eines ersten vorgegebenen Höchstabstands aufweisen. Alternativ kann beispielsweise dem Benutzer jeweils vor Aufnahme des ersten und zweiten Bildes angezeigt werden, dass die jeweils durch die optische Hauptachse der Kamera gebildete Gerade einen Abstand zum virtuellen Objekt unterhalb eines zweiten vorgegebenen Höchstabstands aufweist und somit richtig positioniert ist. Es kann auch vorgesehen sein, dass das erste und/oder zweite Bild automatisch bei Erreichen einer richtigen Positionierung aufgenommen werden. Um eine zyklisch wechselnde Anzeige zu ermöglichen, werden das erste und zweite Bild oder die daraus erzeugten Überlagerungs-Bilder in einem Speicher gespeichert, beispielsweise einem Arbeitsspeicher der Kommunikationseinrichtung.

Der beschriebene Objekt-Speicher zum Speichern der Definitionen der virtuellen Objekte kann vorteilhaft in der Kommunikationseinrichtung angeordnet sein. Da jedoch vorteilhaft Definitionen einer Vielzahl virtueller Objekte gespeichert werden, ist besonders vorteilhaft ein externer Objekt-Speicher vorgesehen, auf welchen die Kommunikationseinrichtung zum Abrufen und/oder Speichern von Definitionen virtueller Objekte über eine zumindest abschnittsweise drahtlose Kommunikationsverbindung zugreifen kann. Es können auch beide Arten von Objekt-Speichern vorgesehen sein, wobei beispielsweise in einem lokalen, in der Kommunikationseinrichtung angeordneten Objekt-Speicher jeweils die Definitionen der virtuellen Objekte gespeichert werden, die sich im Objektraum der Kamera befinden, oder die sich in einem ausgehend vom Objektraum der Kamera erweiterten Raumgebiet befinden, um auch virtuelle Objekte einzuschließen, die bei begrenzten Positions- und Orientierungsänderungen der Kommunikationseinrichtung vom Objektraum der Kamera erfasst werden. Ein solcher lokaler Objekt-Speicher kann vorteilhaft in zyklischen Abständen mit einem externen Objekt-Speicher abgeglichen werden.

Auch vom Benutzer vorgenommene Änderungen an den Definitionen virtueller Objekte und die Definitionen neu erstellter virtueller Objekte können vorteilhaft zunächst im lokalen Objekt-Speicher abgelegt und in zyklischen Abständen oder in Antwort auf eine entsprechende Benutzereingabe mit dem externen Objekt-Speicher abgeglichen werden.

Der Parameter-Speicher, in welchem die Kamera-Parameter gespeichert sind, ist vorzugsweise in der Kommunikationseinrichtung angeordnet. Im Parameter-Speicher ist ferner vorzugsweise eine Definition des übergeordneten Raumkoordinatensystems gespeichert. Alternativ kann auch vorgesehen sein, dass einem virtuellen Objekt individuell ein übergeordnetes Raumkoordinatensystem zugeordnet wird und eine entsprechende Definition in der Definition des jeweiligen virtuellen Objektes enthalten ist.

Es sei angemerkt, dass der Parameter-Speicher und der lokale Objekt-Speicher in der Kommunikationseinrichtung in einem gemeinsamen Speichermodul angeordnet sein können.

Eine erfindungsgemäße bewegliche Kommunikationseinrichtung umfasst eine Kamera, einen Bildschirm, eine Benutzerschnittstelle, einen Mikroprozessor, einen Parameter-Speicher mit darin gespeicherten Kamera-Parametern, wenigstens einen Sensor zum Bestimmen der Position und der Orientierung der Kommunikationseinrichtung, und einen Programm-Speicher mit einem darin gespeicherten Programm, welches dazu ausgebildet ist, ein Verfahren wie oben beschrieben auszuführen, wenn es durch den Mikroprozessor ausgeführt wird.

Es liegt ferner ein System im Rahmen der Erfindung, welches eine zum Ausführen des Verfahrens ausgebildete bewegliche Kommunikationseinrichtung und einen Server umfasst, mit welchem die Kommunikationseinrichtung über eine drahtlose Verbindung kommunizieren kann, wobei der Server einen Objekt-Speicher zum Speichern von Definitionen virtueller Objekte umfasst.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer bevorzugten Ausführungsform einer erfindungsgemäßen beweglichen Kommunikationseinrichtung,
- Fig. 2:: eine schematische Darstellung eines auf dem Bildschirm der Kommunikationseinrichtung dargestellten Überlagerungs-Bildes mit beispielhaften virtuellen Objekten,
- Fig. 3-6:: schematisch bevorzugte Beispiele für Bedien- und Anzeigeelemente einer Benutzerschnittstelle der Kommunikationseinrichtung,
- Fig. 7:: schematisch die Perspektivtransformation eines virtuellen Objekts aus dem Objektraum in den Bildraum der Kamera der Kommunikationseinrichtung,
- Fig. 8: schematisch eine Änderung der Größe und Position des in Fig. 7 dargestellten virtuellen Objektes,
- Fig. 9:: schematisch eine bevorzugte Ausführungsform der Benutzerschnittstelle zum Bearbeiten von Zusatzinhalten eines virtuellen Objektes,
- Fig. 10: schematisch das Anzeigen von Genauigkeiten bezüglich der Parameter eines virtuellen Objektes,
- Fig. 11:: schematisch das Auswählen eines von mehreren virtuellen Objekten, und
- Fig. 12:: schematisch eine beispielhafte Kommunikation zwischen einem AR-Objekte-Server und der Kommunikationseinrichtung.

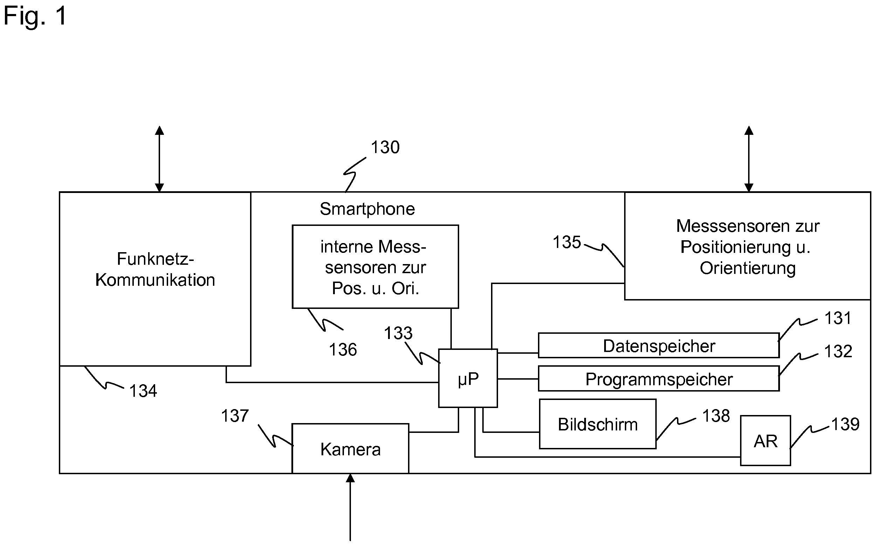

Fig. 1 zeigt als eine beispielhafte bewegliche Kommunikationseinrichtung 130 ein Mobilfunktelefon, insbesondere ein Smartphone. Das Smartphone 130 kann zum Einsatz in einem drahtlosen Kommunikationsnetz eingesetzt werden. Zu diesem Zweck weist das Smartphone 130 eine Funknetz-Kommunikationsschnittstelle 134 auf, über die es über ein Funknetz mit einem in Fig. 1 nicht dargestellten Server 230, insbesondere einem AR-Objekte-Server, Daten austauschen kann. Über die Funknetz-Kommunikationsschnittstelle 134 kann das Smartphone 130 insbesondere Definitionen von virtuellen Objekten und weitere Parameter vom AR-Objekte-Server empfangen oder zu diesem senden, um die virtuellen Objekte auf dem Bildschirm 138 als Überlagerung mit einem von der Kamera 137 aufgenommenen Bild anzuzeigen.

Zur Bestimmung seiner eigenen Position und Orientierung umfasst das Smartphone 130 entsprechende Messsensoren, welche im dargestellten Ausführungsbeispiel sowohl interne Messsensoren 136 als auch zur Kommunikation mit einer außerhalb des Smartphones 130 angeordneten Einrichtung ausgebildete Messsensoren 135 umfassen.

Sowohl zum Ermitteln der Position als auch der Orientierung des Smartphones 130 können jeweils mehrere Sensoren, auch unterschiedliche Arten von Sensoren eingesetzt werden. Vorzugsweise ist jeder der eingesetzten Messsensoren dazu ausgebildet, zu einer ermittelten Positions- oder Orientierungsinformation deren Genauigkeit zu ermitteln. Bei Einsatz mehrerer Sensoren kann beispielsweise ein Mittelwert gebildet werden oder es können die Informationen des Sensors mit der jeweils höheren Genauigkeit verwendet werden oder es kann ein Schätzverfahren angewendet werden. Ferner können je nach Einsatzumgebung und Einsatzzweck unterschiedliche Arten von Messsensoren zur Positions- und Orientierungsbestimmung eingesetzt werden.

Im vorliegenden Ausführungsbeispiel umfassen die Messsensoren 135 zur Positionsbestimmung des Smartphones 130 einen GNSS (Global Navigation Satelliten System)-fähigen Empfänger, welcher beispielsweise als herkömmlicher GPS-Empfänger ausgebildet ist. Der GPS-Empfänger ist zum Empfangen und Auswerten von Positionssignalen eines Satellitensystems ausgebildet. Aus den Positionssignalen wird eine Positionsinformation gewonnen, die die Positionskoordinaten des Smartphones 130, die Genauigkeit dieser Positionskoordinaten und vorzugsweise noch einen Gültigkeitszeitpunkt enthält. Die Genauigkeit liegt in der Regel als Standardabweichung vor.

Die Messsensoren 136 zur Bestimmung der Orientierung umfassen vorzugsweise Inertialsensoren auf Basis von mikroelektromechanischen Systemen (MEMS) oder Faserkreiseln. Es können aber auch andere geeignete Beschleunigungs- oder Drehsensoren eingesetzt werden.

Weiterhin weist das Smartphone 130 einen als programmierbare Steuereinrichtung ausgebildeten Mikroprozessor 133 auf. Der Mikroprozessor 133 ist dazu ausgebildet, Überlagerungs-Bilder durch Überlagern von mit der Kamera 137 aufgenommenen Bildern mit wenigstens einem virtuellen Objekt zu erzeugen und auf dem Bildschirm 138 anzuzeigen, wobei die Definitionen der virtuellen Objekte im dargestellten Ausführungsbeispiel als Datensätze in einem AR-Speicher 139 bereitgestellt werden. Ferner ist der Mikroprozessor 133 dazu ausgebildet, aus den Signalen der Messsensoren 135 und 136 die Position und Orientierung des Smartphones 130 und deren Genauigkeiten zu ermitteln. Insbesondere werden mittels der Sensoren 135 und 136 zur Positions- und Orientierungsbestimmung des Smartphones 130 Daten bezüglich eines übergeordneten Raumkoordinatensystems erzeugt. Im dargestellten Ausführungsbeispiel ist die Definition des übergeordneten Raumkoordinatensystems in einem Daten-Speicher 131 gespeichert. Die Definition des übergeordneten Raumkoordinatensystems kann auch von zentraler Stelle, beispielsweise von einem AR-Objekte-Server 230 bereitgestellt werden. Es ist auch denkbar, dass jede Definition eines virtuellen Objektes eine zugeordnete Definition eines übergeordneten Raumkoordinatensystems umfasst.

Im Datenspeicher 131 sind ferner Kamera-Parameter gespeichert, die zum Ausführen einer Perspektivtransformation vom Objektraum in den Bildraum der Kamera 137 erforderlich sind. Insbesondere wird durch die Kamera-Parameter die innere Orientierung der Kamera 137 definiert.

Zum Bereitstellen der beschriebenen Funktionalität führt der Mikroprozessor 133 ein im Programm-Speicher 132 gespeichertes Programm aus.

Die Definitionen virtueller Objekte, welche jeweils zumindest eine Position, eine Orientierung und eine Gestalt des jeweiligen virtuellen Objektes umfassen, können über eine Benutzerschnittstelle neu erstellt oder geändert werden, wobei im dargestellten Ausführungsbeispiel der Bildschirm 138 zu diesem Zweck als kapazitiver Touchscreen ausgebildet sein kann.

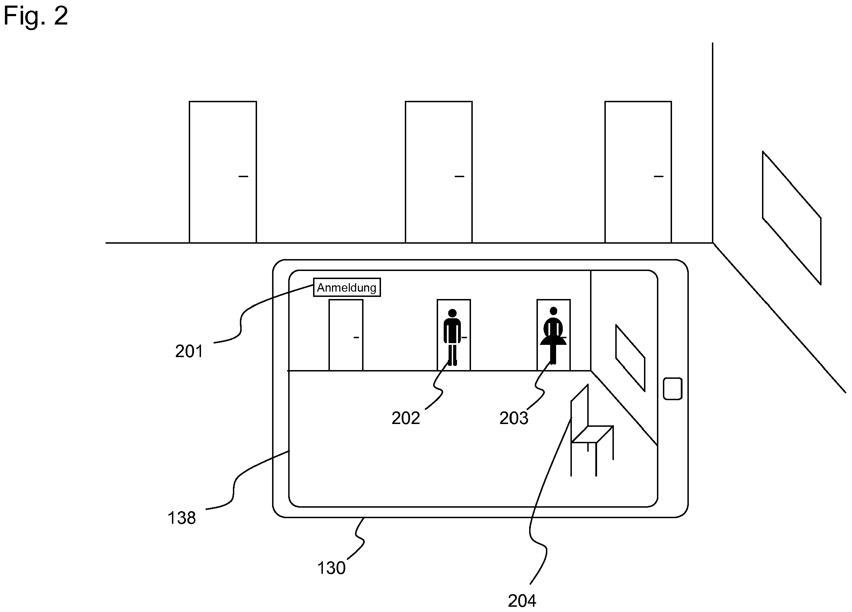

In Fig. 2 ist schematisch ein auf dem Bildschirm 138 des Smartphones 130 dargestelltes Überlagerungs-Bild gezeigt, um die Funktionsweise der Augmented Reality (AR) zu veranschaulichen. Ein mit der Kamera 138 aufgenommenes Bild der realen Umgebung ist in dem in Fig. 2 dargestellten Beispiel ergänzt um Darstellungen virtueller Objekte 201 bis 204, bei welchen es sich beispielsweise um Hinweisschilder 201, Symbole 202 bzw. 203, sowie insbesondere um dreidimensionale Objekte wie zum Beispiel einen Stuhl 204 handeln kann.

Die Erfindung ermöglicht vorteilhaft, die Definitionen virtueller Objekte direkt mittels des Smartphones 130 neu zu erstellen oder bestehende Definitionen zu bearbeiten. Dies erfolgt über Benutzereingaben unter Verwendung des als Touchscreen ausgebildeten Bildschirms 138.

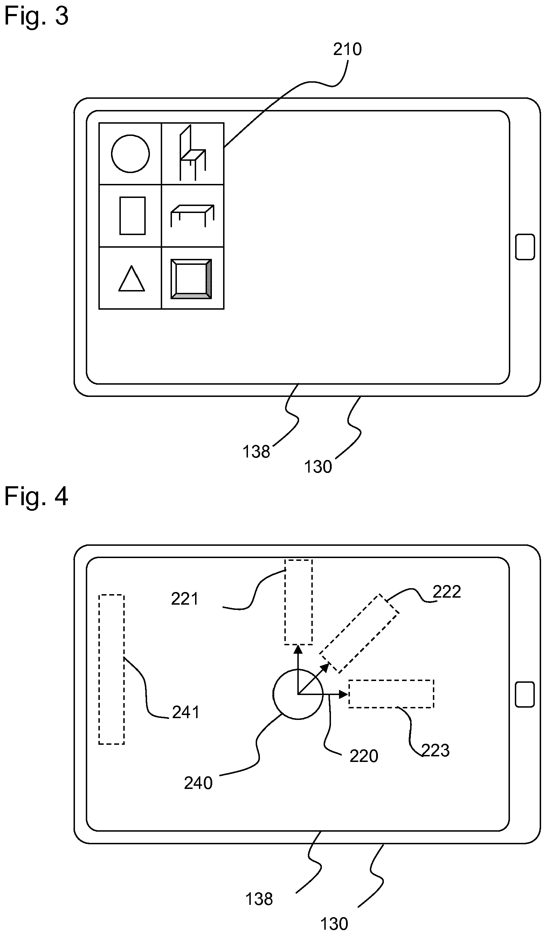

In den Figuren 3 bis 6 sind schematisch Beispiele für Bedien- und Anzeigeelemente der Benutzerschnittstelle dargestellt.

In Fig. 3 ist beispielhaft eine Objektauswahl 210 dargestellt, mittels der die Gestalt eines neu zu erstellenden virtuellen Objektes aus einer Anzahl vorgegebener Templates ausgewählt werden kann, wobei die Auswahl beispielsweise nach einer Benutzereingabe angezeigt wird, mittels der die Neuerstellung eines virtuellen Objektes gestartet wurde.

Nach Auswahl einer Kugel als Gestalt eines neu zu erstellenden virtuellen Objektes wird diesem vorteilhaft eine Position auf der optischen Hauptachse der Kamera in einem vorgegebenen Abstand zum Smartphone 130 zugeordnet, so dass das neu erstellte Objekt im Überlagerungs-Bild in der Bildmitte angezeigt wird. Dies ist beispielhaft in Fig. 4 dargestellt.

Zur Veranschaulichung, dass das neu erstellte virtuelle Objekt 240 ein dreidimensionales Objekt ist, dessen zweidimensionale Projektion angezeigt wird, wird vorteilhaft ein Koordinatendreibein 220 angezeigt. Eine Positionsänderung durch Translation kann im dargestellten Beispiel mittels Eingabeflächen 221, 222 und 223 durchgeführt werden, wobei durch Wischen entlang einer der Eingabeflächen 221, 222 bzw. 223 eine Translation entlang der entsprechenden Raumrichtung erfolgt. Es sei angemerkt, dass die zweidimensionale Eingabegeste eine Änderung des virtuellen Objektes im dreidimensionalen Objektraum bewirkt, wobei das Ergebnis als zweidimensionale Projektion dem Benutzer angezeigt wird. Die Eingabeflächen 221, 222 und 223 können visuell gekennzeichnet sein. Es kann aber vorteilhaft auch auf eine visuelle Kennzeichnung verzichtet werden, wobei der Benutzer in diesem Fall intuitiv eine Wischbewegung entlang der visuell dargestellten Koordinatenachse ausführen kann. Im dargestellten Beispiel ist ferner eine Eingabefläche 241 vorgesehen, mittels der eine Skalierung des virtuellen Objektes 240, d.h. eine Größenänderung, bewirkt werden kann.

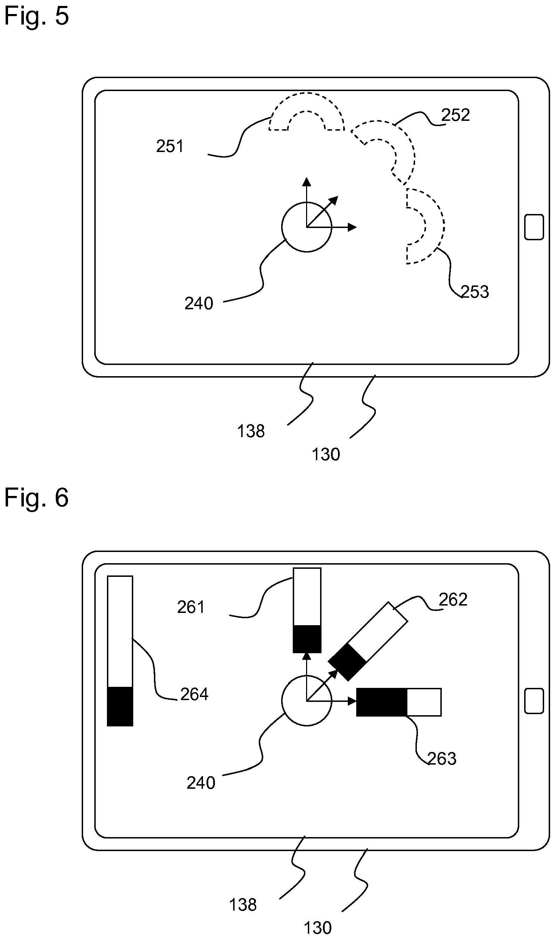

Fig. 5 zeigt Eingabeflächen 251, 252 und 253, über die eine Änderung der Orientierung des virtuellen Objektes 240 bewirkt werden kann, und zwar in analoger Weise wie eine Translationsänderung mittels der Eingabeflächen 221, 222 und 223 ausgeführt wird.

Es kann ferner vorteilhaft vorgesehen sein, dem Benutzer des Smartphones 130 die Genauigkeiten der Position, der Orientierung und des Maßstabes des virtuellen Objektes 240 dem Benutzer anzuzeigen. In Fig. 6 sind beispielhaft Anzeigeelemente 261, 262 und 263 zur Anzeige der Genauigkeit der Position des virtuellen Objektes 240 bezüglich der jeweiligen Raumrichtung und ein Anzeigelement 264 zur Anzeige der Genauigkeit des Maßstabes des virtuellen Objektes 240 dargestellt.

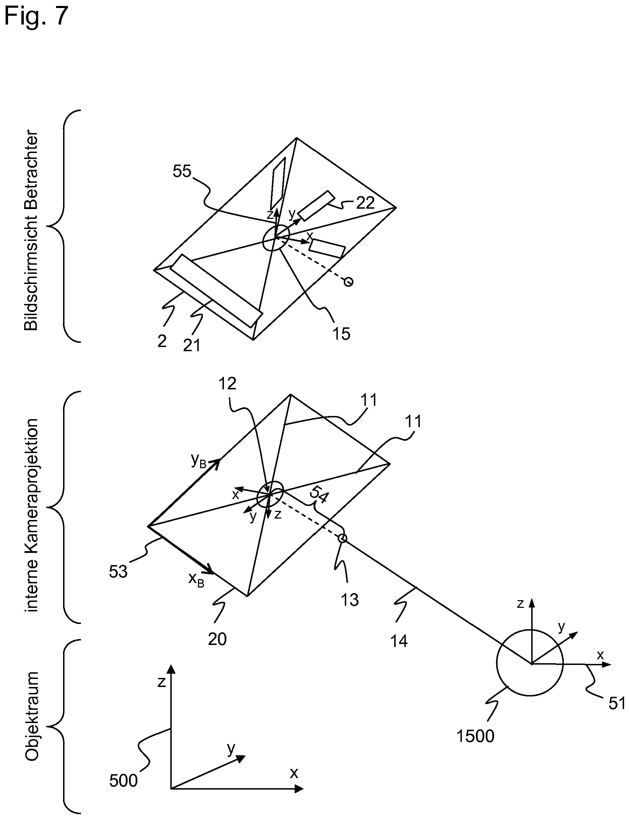

In den Figuren 7 bis 11 ist die Perspektivtransformation zwischen 3-D-Ojektraum und 2-D-Bildraum für verschiedene Nutzeraktionen veranschaulicht. Im unteren Drittel der Figuren 7 bis 11 ist jeweils der 3-D-Ojektraum dargestellt, in welchem sich insbesondere reale Objekte, virtuelle Objekte, d.h. AR-Objekte oder Projektionen von 2-D Bildschirminhalten des Smartphones 130 befinden. In der Mitte der Figuren 7 bis 11 ist jeweils eine 2-D-Bildraumabbildung des 3-D Objektraumes dargestellt, welche mittels einer zentralperspektivischen Abbildung auf die seitenverkehrte 2-D-Bildebene der Kamera erzeugt wird. Im oberen Drittel der Figuren 7 bis 11 ist jeweils eine Betrachteransicht des 2-D-Bildraums der Kamera 137 auf dem Bildschirm 138 des Smartphones 130 dargestellt, wobei die im oberen Drittel dargestellte Betrachteransicht eine Punktspiegelung der in der Bildmitte dargestellten 2-D-Bildraumabbildung am Hauptpunkt des 2-D Bildraums ist.

Die in Fig. 7 dargestellte Zentralperspektive wird definiert durch den Objektiv-Hauptstrahl 14, welcher senkrecht zur Bildebene 20 und durch den Bildhauptpunkt 12 und den Objektivbrennpunkt 13 als Projektionszentrum verläuft, sowie durch die Objektiv-Brennweite 54 definiert, wobei der Bildhauptpunkt 12 der Schnittpunkt der Bilddiagonalen 11 ist. Objektivverzeichnungen sind in den Figuren 7 bis 11 der einfacheren Darstellung halber nicht berücksichtigt. Das zweidimensionale Bildkoordinatensystem ist beispielhaft mit Bezugszeichen 53 bezeichnet und umfasst die beiden Achsen x_{B} und y_{B}.

Durch eine nicht dargestellte Nutzeraktion wird in der Bildschirmansicht 2 eine Zusatzinformation erzeugt, welche die Kugel 15 als virtuelles Abbild von AR-Objekt 1500, sowie die 3 Achsen eines Koordinatenachsendreibeins 55 umfasst, wobei das Koordinatenachsendreibein 55 als Abbild des lokalen 3-D Objektkoordinatensystems 51 erzeugt wird. Ferner werden Eingabefelder 21 und 22 in der Bildschirmansicht 2 erzeugt, in denen der Nutzer 2-D-Aktionen ausführen kann, um 3 Translationen und einen Maßstab für das AR-Objekt 1500 im lokalen Koordinatensystem 51 zu verändern.

Das jeweils einem AR-Objekt zugeordnete jeweilige lokale 3-D-Objektkoordinatensystem 51 ist jeweils parallel zu einem globalen Koordinatensystem 500, wobei die Definitionen der AR-Objekte in einem AR-Objekte-Server 230 vorzugsweise Daten im globalen Koordinatensystem 500 umfassen. Das globale Koordinatensystem 500 ist vorzugsweise als übergeordnetes, nicht kommunikationseinrichtungsfestes Raumkoordinatensystem definiert.

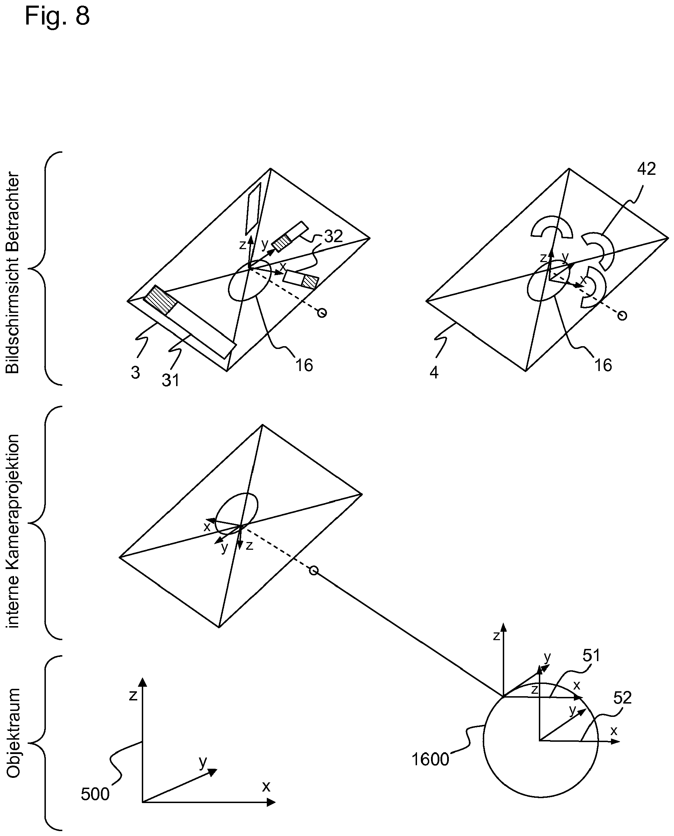

Fig. 8 zeigt das durch Veränderung des AR-Objektes 1500 erzeugte AR-Objekt 1600, welches in der Bildschirmansicht 3 zur Ansicht 16 wird. In der Benutzerschnittstelle des AR-fähigen Smartphones 130 kann vorzugsweise jederzeit zwischen Translationen und Maßstabsänderung einerseits oder 3 Drehungen um die Achsen eines lokalen Objektkoordinatensystems 51 oder 52 andererseits gewechselt werden.

Die Bildschirmansicht 3 zeigt mit dem virtuellen Abbild 16 ein verschobenes und vergrößertes AR-Objekt an, das aus dem AR-Objekt 15 entstanden ist. Die Veränderungen vom AR-Objekt 15 zum AR-Objekt 16 werden in der 2-D-Bildschirmansicht 3 im dargestellten Beispiel durch die Anzeigen 31 bzw. 32 angezeigt.

Die Bildschirmansicht 4 zeigt beispielhaft zum einen die Änderung in Form einer Verschiebung und Vergrößerung des AR-Objektes aus der Bildschirmansicht 3 an und zusätzlich wird in der Bildschirmansicht 4 der Wechsel zur Veränderungsmöglichkeit der 3 Drehungen um die 3 Achsen des lokalen Objektkoordinatensystem 52 angezeigt, dessen Ursprung durch die Aktion der Verschiebung und Vergrößerung in der Bildschirmansicht 3 verschoben wurde. Die Bildschirmansicht 4 zeigt also die 3 Achsen für das Objekt 1600 an.

Über das beispielhafte Bedienelement 55 kann das Speichern eines neu erstellen oder geänderten AR-Objektes im AR-Objekte-Server 230 initiiert werden, wobei vorzugsweise eine Koordinatentransformation des zu speichernden AR-Objektes in ein nicht Kommunikationseinrichtungsfestes, übergeordnetes Koordinatensystem erfolgt, sofern Position und Orientierung des zu speichernden AR-Objektes in einem Kommunikationseinrichtungsfesten Koordinatensystem definiert sind, was in der Regel bei neu erstellten AR-Objekten zunächst der Fall ist, bis diese durch eine entsprechende Nutzereingabe im 3-D-Objekttraum fixiert werden.

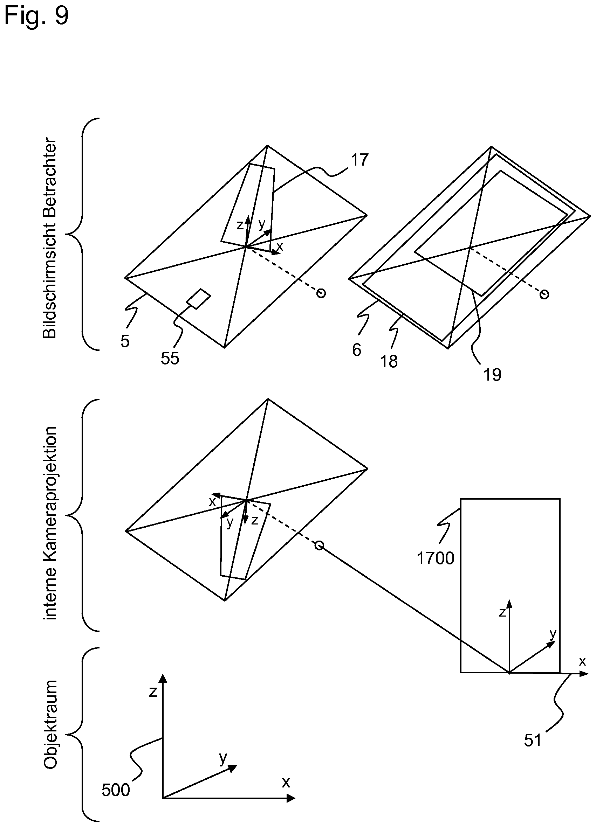

In der Bildschirmansicht 5 in Fig. 9 wird das virtuelle Abbild 17 eines AR-Objektes 1700 dargestellt. Das AR-Objekt 1700, im dargestellten Beispiel eine Informationswand mit Textinhalten, kann ein neu erstelltes AR-Objekt oder ein durch Umdefinition eines bereits erstellten AR-Objektes, beispielsweise des AR-Objektes 1500, erzeugtes AR-Objekt sein.

In der Bildschirmansicht 6 wird beispielhaft eine Entzerrungs-Umprojektion 18 von 2-D nach 2-D angezeigt, die es dem Benutzer ermöglicht, das AR-Objekt 1700 visuell besser zu nutzen, insbesondere um zum Beispiel einen ausreichend großen Bereich zur Textbearbeitung bereitzustellen. Zugriff auf andere Bedienelemente oder AR-Objekte kann zum Beispiel mittels an sich bekannter Fenstertechnik erfolgen. Dies ist beispielhaft durch das mit Bezugszeichen 19 bezeichnete Anzeigeelement illustriert.

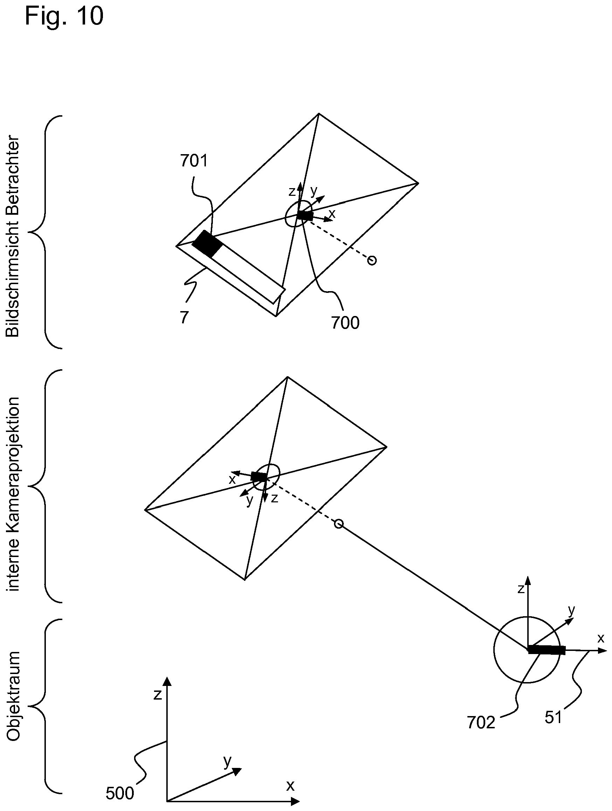

Die in Fig. 10 gezeigte Bildschirmansicht 7 zeigt mit den 2 geschwärzten Flächen 700 und 701 beispielhaft einige Parameter-Genauigkeiten des 3-D Objektraums an, die in Echtzeit berechnet werden und dem Benutzer des AR-fähigen Smartphones die Qualität seiner Aktionen sofort anzeigt, wobei im dargestellten Beispiel die Balken-Fläche 700 mit ihrer Balkenlänge in x-Richtung die Genauigkeit der Position in x-Richtung und die Balken-Fläche 701 die Genauigkeit des Maßstabs wiedergibt. Die Balken-Fläche 700 ist dabei die Abbildung der im Objektraum als Balken-Fläche 702 dargestellten Genauigkeit.

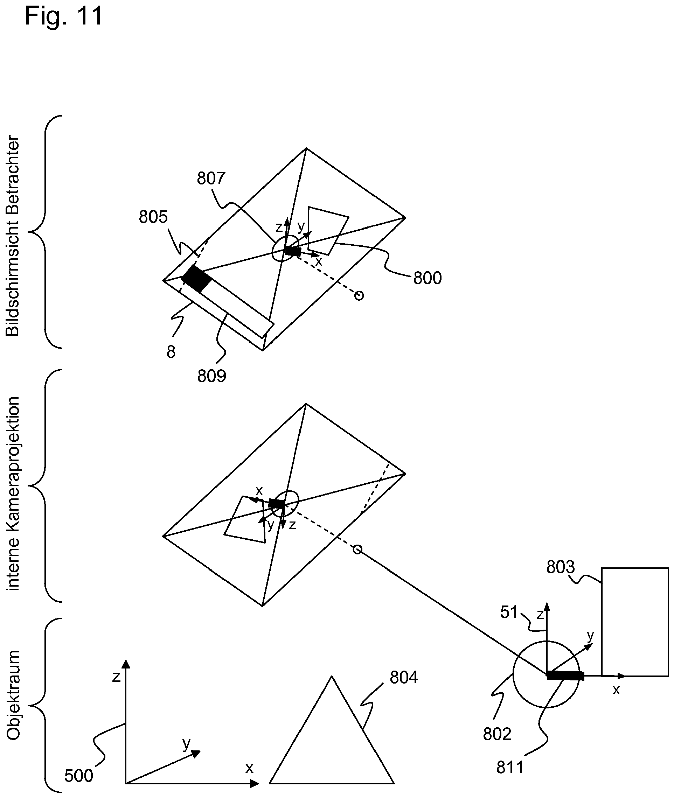

Fig. 11 zeigt schematisch das Auswählen eines von mehreren virtuellen Objekten. In der Bildschirmansicht 8 werden die jeweiligen Abbilder 807, 800 und 805 der AR-Objekte 802, 803 du 804 dargestellt. Das AR-Objekt 807 ist im dargestellten Beispiel eine Such-Kugel in Form eines bildschirmfesten Pseudo-AR-Objektes, welche dazu dient, eines von mehreren AR-Objekten auszuwählen, wobei dies auf verschiedenste Weise erfolgen kann, zum Beispiel durch 3-D-Berührung eines anderen AR-Objekts im Objektraum oder durch mathematische Abstandsfunktionen im Objektkoordinatensystem 500. Das jeweils ausgewählte AR-Objekt wird in der Bildschirmansicht 8 optisch gekennzeichnet, beispielsweise durch eine entsprechende Kennzeichnung der Kantensignatur des ausgewählten AR-Objektes. Im dargestellten Beispiel wird automatisch mittels einer vorgegebenen Abstandsfunktion das virtuelle Abbild 800 und nicht 805, also das AR-Objekt 803 und nicht 804 ausgewählt. Mittels des Abstandsanzeigers 809 wird der Abstand des ausgewählten AR-Objektes vom Smartphone 130 wiedergegeben.

Sofern die Datensätze zu den AR-Objekten 803 oder 804 auch über Genauigkeiten der Erstellung verfügen, können auch diese in der Bildschirmansicht 8 dargestellt werden, beispielsweise als Abbildung der im Objektraum definierten Genauigkeitsanzeige 811. Bei den Abstandsberechnungsfunktionen könnte ebenfalls eine Fehlerfortpflanzung auf die Zielgröße Abstand vorgenommen werden.

In allen Beispielen der Figuren 7 bis 11 wurde die Position und Orientierung der AR-fähigen Kommunikationseinrichtung als konstant angenommen, um die Darstellungen zu vereinfachen.

Durch eine zusätzliche Bewegung der AR-fähigen, als Smartphone 130 ausgebildeten Kommunikationseinrichtung und dem Vorhandensein von im 3-D Objektraum fixierten AR-Objekten können, durch konvergente nacheinander erzeugte Bilder mit zum Beispiel das jeweilige AR-Objekt durchstoßende Objektivhauptstrahlen, sequentielle Bilder von annähernd stereoskopischem Raumeindruck erzeugt werden, wodurch dem Benutzer ein zusätzliches räumliches Empfinden ermöglicht wird.

Alle im Zusammenhang mit den Figuren 7 bis 11 beschriebenen Funktionen können durch eine geeignete 2-D-Darstellung dem Benutzer auch zeitgleich oder in vordefinierten Kombinationen angeboten werden.

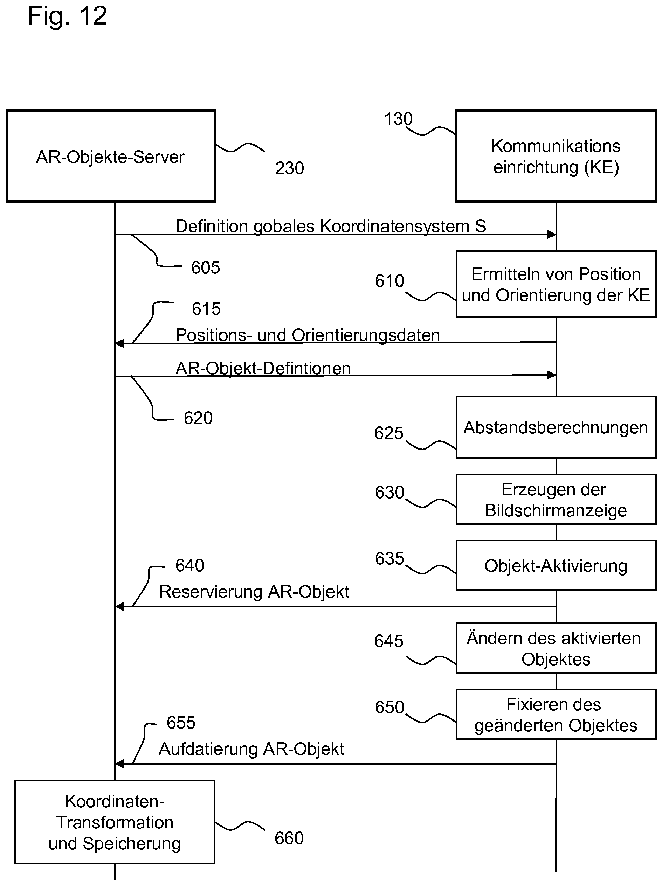

Die Fig. 12 zeigt beispielhaft die wesentlichen Abläufe bei der in Fig. 11 dargestellten AR-Objekt-Auswahl, wobei beispielhaft die wesentlichen Aktionen, welche das Smartphone 130 und der AR-Objekte-Server 230 ausführen, sowie die zwischen Smartphone 130 und AR-Objekte-Server 230 ablaufende Kommunikation. Eine parallel ablaufende ständige Neubestimmung der Position und Orientierung des Smartphones 130, sowie das ständige Neuberechnen von Überlagerungs-Bildern sind nicht dargestellt.

In Schritt 605 wird die Definition des globalen Koordinatensystems 500 vom AR-Objekte-Server 230 zum Smartphone 130 übertragen. In Schritt 610 berechnet das Smartphone 130 seine Position und Orientierung sowie die zugehörigen Genauigkeiten. Die Ergebnisse dieser Berechnungen übermittelt das Smartphone 130 in Schritt 615 an den AR-Objekte-Server 230 zusammen mit weiteren Parametern, welche insbesondere Informationen zu dem von der Kamera 137 des Smartphones 130 aktuell abbildbaren Objektraum, der in Abhängigkeit der inneren Orientierung der Kamera 137 ermittelbar ist, umfassen kann, sowie gegebenenfalls Informationen dazu, ob für den gewünschten Einsatzzweck alle, oder eventuell nur bestimmte Arten von AR-Objekten angezeigt werden sollen. In Schritt 620 übermittelt der AR-Objekte-Server 230 daraufhin Definitionen derjenigen AR-Objekte zum Smartphone 130, welche sich im aktuell abbildbaren Objektraum befinden und gegebenenfalls übermittelte Einschränkungen erfüllen. Nach Empfang dieser Definitionen werden im Smartphone 130 in Schritt 625 Abstandsberechnungen bezüglich der Such-Kugel 802 durchgeführt und in Abhängigkeit des Ergebnisses in Schritt 630 ein Überlagerungs-Bild erzeugt und auf dem Bildschirm 138 angezeigt, welches die Abbilder der Such-Kugel 802, der Wand 803, des Dreiecks 804, des lokalen Koordinatensystems 51 und des Genauigkeitsmaßes 811, sowie den Abstandanzeiger 809 umfasst. In Schritt 635 erfolgt die automatische Auswahl des AR-Objektes 803 und entsprechende visuelle Kennzeichnung im angezeigten Bild durch das Smartphone 130. Das ausgewählte Objekt ist nun zum Ändern aktiviert, d.h. durch Benutzereingaben bewirkte Änderungen werden für das ausgewählte AR-Objekt ausgeführt. Daher übermittelt das Smartphone 130 an den AR-Objekte-Server vorzugsweise in Schritt 640 ein Aktivierungssignal, um das ausgewählte Objekt für eine Änderung zu reservieren, damit zum Beispiel vermieden wird, dass zeitgleich das gleiche AR-Objekt durch einen anderen Benutzer geändert wird. Nun kann das ausgewählte AR-Objekt in Schritt 645 geändert werden. Sind die Änderungen abgeschlossen kann durch eine entsprechende Benutzereingabe in Schritt 650 eine Fixierung der Änderungen bewirkt werden. Daraufhin wird in Schritt 655 vom Smartphone 130 eine entsprechende Nachricht zur Aufdatierung des AR-Objektes zum AR-Objekte-Server 230 übermittelt, welche die geänderte Definition des AR-Objektes umfasst. Nach Empfang dieser Nachricht führt der AR-Objekte-Server 230 in Schritt 660 eine gegebenenfalls erforderliche Koordinatentransformation von einem lokalen in das globale Koordinatensystem durch und speichert die geänderte Definition des AR-Objektes.

Die Erfindung stellt somit ein Verfahren und ein System zur Positionierung, Orientierung und Skalierung von Augmented Reality 3-D-Objekten mittels einer drahtlosen AR-fähigen Kommunikationseinrichtung zwecks Ersterstellung oder Aufdatierung in einem Speicher eines AR-Objekt-Servers bereit, wobei nur Nutzeraktionen im sichtbaren 2-D Bildraum des Bildschirms der Kommunikationseinrichtung genutzt werden. Diese speziellen 2-D Bildraum Nutzeraktionen sind Anweisungen des Nutzers, insbesondere durch Berührung und Bewegung des Fingers auf einem kapazitiven Bildschirm der Kommunikationseinrichtung, die für den Betrachter eindeutig die Position und Orientierung eines AR Objektes im 3-D Objektraum festlegen. Sonstige geometrische 3-D Eigenschaften, wie zum Beispiel die Ausdehnung eines 3-D AR-Objektes können ebenfalls mit den gleichen Methoden der Erfindung nur durch Aktionen im 2-D Bildraum festgelegt werden, wobei das AR-Objekt vorzugsweise in seiner Datenstruktur in entsprechende Unterstrukturen zerlegt wird und diese einzeln ansprechbar und veränderbar sind und weiterhin als Teil einer Gesamtstruktur definiert sind.

Hierfür ist die AR-fähige Kommunikationseinrichtung insbesondere dazu ausgebildet, eine Positionierung, eine Orientierung, eine Perspektivtransformation und eine Koordinatensystemtransformation durchzuführen und hierzu auch alle resultierenden Genauigkeiten zu berechnen.

Die Perspektivtransformation beinhaltet die Zentralprojektion der Kamera der Kommunikationseinrichtung mit allen notwendigen Korrekturen, wie z. B. den bekannten brennweitenabhängigen Verzeichnungsfunktionen des Objektives, und ermöglicht eine Koordinatentransformation zwischen dem 3-D Objektraum und dem 2-D Bildraum der Kamera der Kommunikationseinrichtung. Diese Perspektivtransformation und die Fehlerfortpflanzung von Genauigkeiten bei dieser Transformation sind an sich bekannt. Bekannt sind ebenfalls diverse Methoden, wie die Position und Orientierung der Kommunikationseinrichtung und damit des 2-D Bildraums mittels Sensoren in der Kommunikationseinrichtung und Ausgleichungsprogrammen, ausgeführt im Mikroprozessor der Kommunikationseinrichtung, in ausreichender Echtzeit bestimmt werden können. Außerdem kann die Kommunikationseinrichtung mit einem AR-Objekte-Server kommunizieren, um dessen 3-D AR Objekte zu nutzen, zu verändern oder neue 3-D AR Objekte hinzuzufügen.

Im 2-D Bildraum der AR-fähigen Kommunikationseinrichtung kann der Betrachter trotz nur 2 Dimensionen des Bildschirms ein 3-D AR Objekt im 3-D Objektraum eindeutig definieren oder verändern. Dies wird dadurch erreicht, dass die Koordinatenachsendreibeine von 3-D Objektraumkoordinatensystemen, welche fest an ein 3-D AR-Objekt gebunden sind, in den Bildraum projiziert werden und dort visualisiert werden und damit das 3-D AR Objekt auch durch alleinige Anweisungen für den 2-D Bildraum eindeutig für die 3 Dimensionen des Objektraums definiert ist und verändert werden kann. Dieses gilt für alle Einzelteile eines gesamten 3-D Objektes, wenn ein fester Punkt als Ursprung eines lokalen 3-D Objektraumkoordinatensystems festgelegt wird und diesem Punkt ein lokales Koordinatendreibein zugeordnet wird und dieses lokale Koordinatensystem in einem globalen Objektkoordinatensystem bekannt ist und in diesem globalen Koordinatensystem auch die Position und Orientierung der Kommunikationseinrichtung bekannt ist.

Eine vorteilhafte Ausgestaltung sieht vor, die jeweiligen Genauigkeiten im Objektraum zu berechnen und in den 2-D Bildraum zu projizieren, so dass der Nutzer der Kommunikationseinrichtung damit eindeutig erkennen kann, welche Genauigkeiten im 3-D Objektraum vorliegen. Dieses geschieht dadurch, dass Fehlermaße für auf die lokalen Koordinatensystemdreibeine bezogene geometrische Objektparameter berechnet werden und im 2-D Bildraum mit eindeutigem Bezug zu den lokalen 3-D Objektraumdreibeinen und/oder den Koordinatensystemursprüngen der lokalen Dreibeine angezeigt werden. Hierbei kann die Position und Orientierung der Kommunikationseinrichtung auch als ein fiktives 3-D AR-Objekt gesehen werden und somit zum Beispiel auch Abstände und deren Genauigkeiten zu der Kommunikationseinrichtung, insbesondere zum Projektionszentrum der Kamera der Kommunikationseinrichtung, im 2-D Bildraum der Kamera angezeigt werden.

Eine weitere vorteilhafte Ausgestaltung des Verfahrens sieht vor, dass ein zwischenzeitlich erzeugtes 3-D AR-Objekt im Objektraum virtuell fixiert wird und danach die AR-fähige Kommunikationseinrichtung derart bewegt wird, dass der Betrachter durch die geeignete Bewegung der Kamera einen zusätzlichen verbesserten Eindruck über die Lage und Orientierung von realen Objekten zum fixierten AR Objekt des 3-D Objektraums erhält, um hieraus zusätzliche nachträgliche Änderungen dieses fixierten AR Objekts vornehmen zu können.

Besonders vorteilhaft ermöglicht die Erfindung die vollständige Definition von 3-D AR Objekten nur im 2-D Bildraum der AR-fähigen Kommunikationseinrichtung durch ein Programm der Kommunikationseinrichtung und zusätzlich nur Nutzeraktionen für den 2-D Bildraum der Kommunikationseinrichtung. Diese 2-D Bildschirmaktionen legen für den Nutzer eindeutig und intuitiv die Erstellung oder Veränderung des 3-D AR Objekt fest.

Vorteilhaft erfolgt eine Anzeige von Genauigkeitsmaßen von 3-D-Parametern bezüglich des 3-D-Objektraumes im 2-D-Bildraum. Insbesondere werden die Genauigkeitsmaße von 3-D-Parametern zusammen mit den 3-D AR-Objekten in der AR-Objektdatenbank abgelegt, um somit eine zusätzliche Hilfe für weitere spätere Nutzungen dieser AR-Objekte zu erhalten. Allgemein ermöglicht die zusätzliche Berechnung, Abspeicherung und Weiterverwendung dieser Genauigkeiten dem Nutzer, seine Aktionsgenauigkeiten bei der Erstellung und Veränderung von 3-D AR-Objekten besser einschätzen zu können, wodurch der Nutzer auch frühzeitig Rückschlüsse auf die spätere Nutzbarkeit seiner 3-D AR Objekte im Verhältnis zur realen Umwelt und für spätere Anwendungen treffen kann. Es kann ferner vorteilhaft vorgesehen sein, dass als Spezialanwendung mit der aktuell genutzten AR-fähigen Kommunikationseinrichtung auch eine Simulation für später einzusetzende AR-fähige Kommunikationseinrichtung mit anderen Positionier- und/oder Orientierungsgenauigkeiten in Echtzeit durchgeführt werden kann, indem Skalierungswerte für die aktuell berechneten Genauigkeiten für Positionierung und/oder Orientierung vorgegeben werden und damit im 2-D Bildraum die später zu erwartenden Genauigkeiten angezeigt werden.

Durch die Anzeige der Genauigkeiten im 2-D Bildraum sind diese Genauigkeiten vorteilhaft in Echtzeit prüfbar, da zum Beispiel bei einer vorliegenden Gaußverteilung und der Darstellung von 1-sigma Genauigkeitswerten im 2-D Bildraum die Abweichungen zwischen realem Objekt zu benachbartem fixiertem 3-D AR Objekt im Mittel zu ca. 68% innerhalb von 1-sigma liegen müssen.

## Patentansprüche

1. Verfahren zum Erstellen und/oder Ändern wenigstens eines virtuellen Objekts mittels einer beweglichen Kommunikationseinrichtung (130), welche eine Kamera (137), einen Bildschirm (138) und eine Benutzerschnittstelle umfasst, mit den Schritten:
a) Bereitstellen einer Definition wenigstens eines virtuellen Objekts, wobei die Definition wenigstens eine Position, eine Orientierung und eine Gestalt des jeweiligen virtuellen Objektes umfasst,
b) Bestimmen der Position und der Orientierung der Kommunikationseinrichtung (130) in einem übergeordneten, nicht Kommunikationseinrichtungsfesten Raumkoordinatensystem,
c) Aufnehmen eines Bildes der realen Umgebung der Kommunikationseinrichtung (130) mittels der Kamera (137),
d) Erzeugen eines Überlagerungs-Bildes durch Überlagern des aufgenommenen Bildes mit dem wenigstens einen virtuellen Objekt,
e) Anzeigen des Überlagerungs-Bildes auf dem Bildschirm (138),
f) Erfassen von Benutzereingaben mittels der Benutzerschnittstelle,
g) Ändern der Definition des wenigstens einen virtuellen Objekts in Abhängigkeit der erfassten Benutzereingaben, und
h) Speichern der geänderten Definition des wenigstens einen virtuellen Objekts in einem Objekt-Speicher, wobei die gespeicherte Definition eine Position und eine Orientierung des virtuellen Objektes im übergeordneten Raumkoordinatensystem umfasst, **dadurch gekennzeichnet, dass** die Definition des wenigstens einen virtuellen Objekts für die dem wenigstens einen virtuellen Objekt zugeordnete Position und/oder Orientierung jeweils Schätzwerte mit einer zugeordneten Genauigkeit umfasst, und wobei die Position und/oder die Orientierung der Kommunikationseinrichtung (130) im übergeordneten Raumkoordinatensystem als Schätzwerte mit einer zugeordneten Genauigkeit bestimmt werden, und in deren Abhängigkeit die Schätzwerte für Position und/oder Orientierung des wenigstens einen virtuellen Objekts im übergeordneten Raumkoordinatensystem und deren zugeordneten Genauigkeiten ermittelt werden und, wobei auf dem Bildschirm (138) eine Information angezeigt wird, welche die Genauigkeiten wiedergibt, die dem Schätzwert der Position und/ oder dem Schätzwert der Orientierung des wenigstens einen virtuellen Objektes zugeordnet sind.

2. Verfahren nach Anspruch 1, wobei das wenigstens eine virtuelle Objekt ein dreidimensionales Objekt ist.

3. Verfahren nach einem der Ansprüche 1 oder 2, wobei die Schritte b), c) d) und e) zyklisch wiederholt ausgeführt werden.

4. Verfahren nach einem der vorstehenden Ansprüche, wobei in Schritt a) die Gestalt des wenigstens einen virtuellen Objekts aus einer Mehrzahl vorgegebener Gestalten mittels der Benutzerschnittstelle ausgewählt wird und dem wenigstens einen virtuellen Objekt eine vorgegebene Position und Orientierung in einem kommunikationseinrichtungsfesten und/oder im übergeordneten, nicht kommunikationseinrichtungsfesten Raumkoordinatensystem zugeordnet wird.

5. Verfahren nach einem der vorstehenden Ansprüche, wobei Schritt a) ein automatisches Abrufen wenigstens einer gespeicherten Definition eines virtuellen Objekts aus dem Objekt-Speicher umfasst.

6. Verfahren nach einem der vorstehenden Ansprüche, wobei zum Bestimmen der Orientierung der Kommunikationseinrichtung die Orientierung der optischen Hauptachse (14) der Kamera (137) der Kommunikationseinrichtung im übergeordneten Raumkoordinatensystem (500) und die Orientierung des Bildkoordinatensystems (53) der Kamera (137) relativ zur optischen Hauptachse (14) bestimmt werden.

7. Verfahren nach einem der vorstehenden Ansprüche, wobei Schritt d) eine Transformation der Koordinaten des wenigstens einen virtuellen Objekts vom dreidimensionalen Objektraum in den zweidimensionalen Bildraum der Kamera (137) in Abhängigkeit von in einem Parameter-Speicher (131) gespeicherten Kamera-Parametern umfasst.

8. Verfahren nach einem der vorstehenden Ansprüche, wobei die Schätzwerte für Position und/oder Orientierung des wenigstens einen virtuellen Objekts im übergeordneten Raumkoordinatensystem und deren zugeordneten Genauigkeiten zusätzlich in Abhängigkeit der Definition des übergeordneten Raumkoordinatensystems und/oder in Abhängigkeit weiterer virtueller Objekte ermittelt wird.

9. Verfahren nach einem der vorstehenden Ansprüche, wobei die Benutzerschnittstelle zum Erfassen von Eingabegesten ausgebildet ist, und wobei das Ändern der Definition des wenigstens einen virtuellen Objekts in Abhängigkeit wenigstens einer über die Benutzerschnittstelle erfassten Eingabegeste erfolgt, wobei die Eingabegeste insbesondere eine mittels eines Zeigemittels ausgeführte ein- oder zweidimensionale Bewegungsabfolge umfasst.

10. Verfahren nach einem der vorstehenden Ansprüche, wobei im Überlagerungsbild ein dem wenigstens einen virtuellen Objekt zugeordnetes Koordinatenachsen-Dreibein angezeigt wird und die Benutzerschnittstelle Eingabeelemente umfasst, über welche jeweils bezüglich einer ausgewählten Koordinatenachse eine Translation oder Rotation des virtuellen Objekts ausführbar ist.

11. Verfahren nach einem der vorstehenden Ansprüche, umfassend die Schritte:
- Erzeugen eines ersten und eines zweiten Überlagerungs-Bildes durch Aufnehmen eines ersten und zweiten Bildes der realen Umgebung der Kommunikationseinrichtung (130) mittels der Kamera und durch jeweiliges Überlagern des ersten und zweiten aufgenommenen Bildes mit dem wenigstens einen virtuellen Objekt, wobei das erste und zweite Bild bei unterschiedlichen Positionen und/oder unterschiedlichen Orientierungen der Kommunikationseinrichtung (130) aufgenommen werden, und
- zyklisch wechselndes Anzeigen des ersten und zweiten Überlagerungs-Bildes auf dem Bildschirm (138).

12. Verfahren nach Anspruch 11, wobei der Benutzer zum Erzielen eines stereoskopischen Effektes bezüglich des wenigstens einen virtuellen Objektes zumindest für die Aufnahme des zweiten Bildes über auf dem Bildschirm (138) angezeigte Informationen zu einer Position und/oder Orientierung der Kommunikationseinrichtung (130) geführt wird, so dass die durch die optische Hauptachse der Kamera (137) bei Aufnahme des ersten und zweiten Bildes gebildeten Geraden den geringsten Abstand zueinander in der Umgebung des wenigstens einen virtuellen Objektes aufweisen.

13. Verfahren nach einem der vorstehenden Ansprüche, ferner umfassend die Schritte
- Definieren wenigstens eines virtuellen Sucher-Objekts, und
- Auswählen des wenigstens einen virtuellen Objekts aus einer Mehrzahl definierter virtueller Objekte in Abhängigkeit der relativen Position und/oder Orientierung zu dem virtuellen Sucher-Objekt, und
- Kennzeichnen des ausgewählten virtuellen Objekts im Überlagerungs-Bild.

14. Verfahren nach einem der vorstehenden Ansprüche, wobei der Objekt-Speicher in der Kommunikationseinrichtung (130) angeordnet ist oder der Objekt-Speicher als externer Speicher ausgebildet ist, auf welchen die Kommunikationseinrichtung (130) zum Abrufen und/oder Speichern der Definition des wenigstens einen virtuellen Objekts über eine zumindest abschnittsweise drahtlose Kommunikationsverbindung zugreifen kann.

15. Bewegliche Kommunikationseinrichtung (130), umfassend
- eine Kamera (137),
- einen Bildschirm (138),
- eine Benutzerschnittstelle,
- einen Mikroprozessor (133),
- einen Parameter-Speicher (131) mit darin gespeicherten Kamera-Parametern,
- wenigstens einen Sensor (135, 136) zum Bestimmen der Position und der Orientierung der Kommunikationseinrichtung (130), und
- einen Programm-Speicher (132) mit einem darin gespeicherten Programm, welches dazu ausgebildet ist, ein Verfahren gemäß einem der Ansprüche 1 bis 14 auszuführen, wenn es durch den Mikroprozessor (133) ausgeführt wird.

## Claims

1. A method for creating and/or changing at least one virtual object using a mobile communication device (130) which comprises a camera (137), a screen (138), and a user interface, comprising the steps of:
a) providing a definition of at least one virtual object, wherein the definition comprises at least a position, an orientation, and a shape of the respective virtual object;
b) determining the position and the orientation of the communication device (130) in a higher-level spatial coordinate system not bound to the communication device;
c) capturing an image of the real environment of the communication device (130) using the camera (137);
d) generating an overlay image by overlaying the captured image with the at least one virtual object;
e) displaying the overlay image on the screen (138);
f) detecting user inputs via the user interface;
g) changing the definition of the at least one virtual object on the basis of the detected user inputs; and
h) storing the changed definition of the at least one virtual object in an object memory, the stored definition comprising a position and an orientation of the virtual object in the higher-level spatial coordinate system;
**characterized in that**
the definition of the at least one virtual object for the position and/or orientation associated with the at least one virtual object comprises respective estimated values with an associated accuracy; and wherein
the position and/or the orientation of the communication device (130) in the higher-level spatial coordinate system is determined as estimated values with an associated accuracy, and the estimated values for position and/or orientation of the at least one virtual object in the higher-level spatial coordinate system and their associated accuracies are determined in dependence thereof; and wherein information is displayed on the screen (138), which represents the accuracies associated with the estimated value of the position and/or the estimated value of the orientation of the at least one virtual object.

2. The method according to claim 1, wherein the at least one virtual object is a three-dimensional object.

3. The method according to any one of claims 1 or 2, wherein steps b), c), d) and e) are repeated cyclically.

4. The method according to any one of the preceding claims, wherein in step a) the shape of the at least one virtual object is selected from a plurality of predefined shapes using the user interface, and a predetermined position and orientation is associated with the at least one virtual object in a spatial coordinate system bound to the communication device and/or in the higher-level spatial coordinate system not bound to the communication device.

5. The method according to any one of the preceding claims, wherein step a) comprises automatically retrieving at least one stored definition of a virtual object from the object memory.

6. The method according to any one of the preceding claims, wherein, for determining the orientation of the communication device, the orientation of the main optical axis (14) of the camera (137) of the communication device in the higher-level spatial coordinate system (500) and the orientation of the image coordinate system (53) of the camera (137) relative to the main optical axis (14) are determined.

7. The method according to any one of the preceding claims, wherein step d) comprises a transformation of the coordinates of the at least one virtual object from the three-dimensional object space in the two-dimensional image space of the camera (137) on the basis of camera parameters stored in a parameter memory (131).

8. The method according to any one of the preceding claims, wherein the estimated values for position and/or orientation of the at least one virtual object in the higher-level spatial coordinate system and the accuracies associated therewith are additionally determined in dependence of the definition of the higher-level spatial coordinate system and/or in dependence of further virtual objects.

9. The method according to any one of the preceding claims, wherein the user interface is configured for detecting input gestures, and wherein the changing of the definition of the at least one virtual object is effected on the basis of at least one input gesture detected via the user interface, wherein the input gesture in particular comprises a one- or two-dimensional sequence of movements executed using a pointing means.

10. The method according to any one of the preceding claims, wherein a tripod of coordinate axes associated with the at least one virtual object is displayed in the overlay image, and wherein the user interface comprises input elements that can be used to execute a translation or rotation of the virtual object with respect to a respectively selected coordinate axis.

11. The method according to any one of the preceding claims, comprising the steps of:
- generating a first and a second overlay image by capturing a first and a second image of the real environment of the communication device (130) using the camera and by overlaying the respective first and second captured images with the at least one virtual object, wherein the first and second overlay images are captured at different positions and/or different orientations of the communication device (130); and
- displaying the first and second overlay images on the screen (138) in cyclically alternating manner.

12. The method according to claim 11, wherein for achieving a stereoscopic effect with respect to the at least one virtual object, the user is directed, via information displayed on the screen (138) and at least for capturing the second image, to such a position and/or orientation of the communication device (130) that the straight lines as defined by the main optical axis of the camera (137) when capturing the first and second images have their smallest distance from each other in the vicinity of the at least one virtual object.

13. The method according to any one of the preceding claims, further comprising the steps of:
- defining at least one virtual viewfinder object; and
- selecting the at least one virtual object from a plurality of predefined virtual objects as a function of the relative position and/or orientation to the virtual viewfinder object; and
- marking the selected virtual object in the overlay image.

14. The method according to any one of the preceding claims, wherein the object memory is arranged in the communication device (130), or wherein the object memory is implemented as an external memory, to which the communication device (130) can access for retrieving and/or storing the definition of the at least one virtual object via an at least partially wireless communication link.

15. A mobile communication device (130) comprising
- a camera (137);
- a screen (138);
- a user interface;
- a microprocessor (133);
- a parameter memory (131) with camera parameters stored therein;
- at least one sensor (135, 136) for determining the position and orientation of the communication device (130); and
- a program memory (132) having a program stored therein, which is adapted to carry out a method according to any one of claims 1 to 14 when being executed by the microprocessor (133).

## Revendications

1. Procédé de création et/ou de modification d'au moins un objet virtuel au moyen d'un dispositif de communication mobile (130), lequel comporte une caméra (137), un écran (138) et une interface utilisateur, le procédé comprenant les étapes :
a) de fourniture d'une définition d'au moins un objet virtuel, la définition englobant au moins une position, une orientation et une forme de l'objet virtuel respectif,
b) de détermination de la position et de l'orientation du dispositif de communication (130) dans un système de coordonnées spatiales supérieur non fixé au dispositif de communication,
c) d'acquisition d'une image de l'environnement réel du dispositif de communication (130) au moyen de la caméra (137),
d) de génération d'une image de superposition par superposition de l'image acquise avec ledit au moins un objet virtuel,
e) d'affichage de l'image de superposition sur l'écran (138),
f) de saisie d'entrées d'utilisateur au moyen de l'interface utilisateur,
g) de modification de la définition dudit au moins un objet virtuel en fonction des entrées d'utilisateur saisies, et
h) de mise en mémoire de la définition modifiée dudit au moins un objet virtuel dans une mémoire d'objet, la définition mise en mémoire englobant une position et une orientation de l'objet virtuel dans le système de coordonnées spatiales supérieur,
**caractérisé en ce que** :
la définition dudit au moins un objet virtuel pour la position et/ou l'orientation associées audit au moins un objet virtuel comporte dans chaque cas des valeurs estimatives présentant une précision associée, et dans lequel
la position et/ou l'orientation du dispositif de communication (130) dans le système de coordonnées spatiales supérieur sont déterminées comme des valeurs estimatives présentant une précision associée, et en fonction de celles-ci, les valeurs estimatives pour la position et/ou l'orientation dudit au moins un objet virtuel dans le système de coordonnées spatiales supérieur et leurs précisions associées sont déterminées, et dans lequel une information est affichée sur l'écran (138), laquelle reproduit les précisions qui sont associées à la valeur estimative de la position et/ou à la valeur estimative de l'orientation dudit au moins un objet virtuel.

2. Procédé selon la revendication 1, dans lequel ledit au moins un objet virtuel est un objet tridimensionnel.

3. Procédé selon l'une quelconque des revendications 1 et 2, dans lequel les étapes b), c), d) et e) sont répétées de manière cyclique.

4. Procédé selon l'une quelconque des revendications précédentes, dans lequel, à l'étape a), la forme dudit au moins un objet virtuel est sélectionnée à partir d'une pluralité de formes prédéfinies au moyen de l'interface utilisateur et une position et une orientation prédéfinies dans un système de coordonnées spatiales fixé au dispositif de communication et/ou dans le système de coordonnées spatiales supérieur non fixé au dispositif de communication sont associées audit au moins un objet virtuel.

5. Procédé selon l'une quelconque des revendications précédentes, dans lequel l'étape a) comporte une consultation automatique d'au moins une définition mise en mémoire d'un objet virtuel dans la mémoire d'objet.

6. Procédé selon l'une quelconque des revendications précédentes, dans lequel, pour la détermination de l'orientation du dispositif de communication, l'orientation de l'axe optique principal (14) de la caméra (137) du dispositif de communication dans le système de coordonnées spatiales (500) supérieur et l'orientation du système de coordonnées d'image (53) de la caméra (137) par rapport à l'axe optique principal (14) sont déterminées.

7. Procédé selon l'une quelconque des revendications précédentes, dans lequel l'étape d) comporte une transformation des coordonnées dudit au moins un objet virtuel de l'espace objet tridimensionnel en espace image bidimensionnel de la caméra (137) en fonction des paramètres de caméra mis en mémoire dans une mémoire de paramètres (131).

8. Procédé selon l'une quelconque des revendications précédentes, dans lequel les valeurs estimatives pour la position et/ou l'orientation dudit au moins un objet virtuel dans le système de coordonnées spatiales supérieur et leurs précisions associées sont déterminées en plus en fonction de la définition du système de coordonnées spatiales supérieur et/ou en fonction d'autres objets virtuels.

9. Procédé selon l'une quelconque des revendications précédentes, dans lequel l'interface utilisateur est conçue pour détecter des gestes d'entrée, et dans lequel la modification de la définition dudit au moins un objet virtuel est réalisée en fonction d'au moins un geste d'entrée détecté par l'interface utilisateur, le geste d'entrée comportant en particulier une séquence de mouvements unidimensionnelle ou bidimensionnelle exécutée à l'aide d'un moyen de pointage.

10. Procédé selon l'une quelconque des revendications précédentes, dans lequel un tripode d'axe de coordonnées associé audit au moins un objet virtuel est affiché dans l'image de superposition et l'interface utilisateur comporte des éléments d'entrée par l'intermédiaire desquels une translation ou rotation de l'objet virtuel peut être réalisée dans chaque cas par rapport à un axe de coordonnées sélectionné.

11. Procédé selon l'une quelconque des revendications précédentes, comportant les étapes :
- de génération d'une première et d'une deuxième image de superposition par acquisition d'une première et d'une deuxième image de l'environnement réel du dispositif de communication (130) au moyen de la caméra et par superposition respective de la première et de la deuxième image acquise avec ledit au moins un objet virtuel, la première et la deuxième image étant acquises dans différentes positions et/ou différentes orientations du dispositif de communication (130), et
- d'affichage à variation cyclique de la première et de la deuxième image de superposition sur l'écran (138).

12. Procédé selon la revendication 11, dans lequel l'utilisateur, pour obtenir un effet stéréoscopique par rapport audit au moins un objet virtuel au moins pour l'acquisition de la deuxième image, est guidé par les informations affichées sur l'écran (138) vers une position et/ou une orientation du dispositif de communication (130), de sorte que les droites formées par l'axe optique principal de la caméra (137) lors de l'acquisition de la première et de la deuxième image présentent l'écart le plus petit l'une par rapport à l'autre dans l'environnement dudit au moins un objet virtuel.

13. Procédé selon l'une quelconque des revendications précédentes, comprenant en outre les étapes :
- de définition d'au moins un objet chercheur virtuel, et
- de sélection dudit au moins un objet virtuel à partir d'une pluralité d'objets virtuels définis en fonction de la position et/ou de l'orientation relatives par rapport à l'objet chercheur virtuel, et
- d'identification de l'objet virtuel sélectionné dans l'image de superposition.

14. Procédé selon l'une quelconque des revendications précédentes, dans lequel la mémoire d'objet est agencée dans le dispositif de communication (130) ou la mémoire d'objet est réalisée sous la forme d'une mémoire externe auxquelles le dispositif de communication (130) peut accéder par l'intermédiaire d'une liaison de communication au moins en partie sans fil pour consulter et/ou mettre en mémoire la définition dudit au moins un objet virtuel.

15. Dispositif de communication (130) mobile, comportant :
- une caméra (137),
- un écran (138),
- une interface utilisateur,
- un microprocesseur (133),
- une mémoire de paramètres (131) dans laquelle les paramètres de la caméra sont mis en mémoire,
- au moins un capteur (135, 136) destiné à déterminer la position et l'orientation du dispositif de communication (130), et
- une mémoire de programme (132) dans laquelle un programme est mis en mémoire, lequel est conçu pour mettre en oeuvre un procédé selon l'une quelconque des revendications 1 à 14 lorsqu'il est exécuté par le microprocesseur (133).
